Europäisches Patentamt

(19) European Patent Office

Office européen des brevets

(11) EP 0 871 174 A1

(12) **EUROPEAN PATENT APPLICATION**
published in accordance with Art. 158(3) EPC

(43) Date of publication:
14.10.1998 Bulletin 1998/42

(51) Int. Cl.$^6$: **G11B 21/21**

(21) Application number: 97944169.8

(86) International application number:
PCT/JP97/03768

(22) Date of filing: 17.10.1997

(87) International publication number:
WO 98/16932 (23.04.1998 Gazette 1998/16)

(84) Designated Contracting States:
DE FR GB

(30) Priority: 17.10.1996 JP 295822/96
18.03.1997 JP 64816/97
21.04.1997 JP 103636/97
28.04.1997 JP 111596/97

(71) Applicant: SONY CORPORATION
Tokyo 141 (JP)

(72) Inventor: MORITA, Osamu
Shinagawa-ku Tokyo 141 (JP)

(74) Representative:
Müller, Frithjof E., Dipl.-Ing.
Patentanwälte
MÜLLER & HOFFMANN,
Innere Wiener Strasse 17
81667 München (DE)

(54) **DISCOIDAL RECORDING MEDIUM, HEAD SLIDER AND RECORDING AND/OR PLAYBACK APPARATUS**

(57) In a discoidal recording medium that is recorded or played back by a recording/playback head mounted on a head slider, the disk surface and/or head slider are also formed with a predetermined pattern of undulation. With the recording/playback head mounted on the head slider placed in contact with the discoidal recording medium, the recording and playback are performed. This makes the recording/playback head and discoidal recording medium unlikely to be worn out and assures good recording and playback characteristics.

FIG.2

## Description

Technical Field

The present invention relates to a disc-type recording medium which is recorded and/or reproduced by a recording and/or reproducing head mounted on a head slider. The present invention relates to a head slider on which the recording and/or reproducing head is mounted. The present invention relates to a recording and/or reproducing apparatus for performing a recording and/or reproducing operation by using the recording and/or reproducing head mounted on the head slider.

Background Art

As a disc-type recording medium for use in a computer system, for example, a hard disc drive is known. The hard disc drive includes a magnetic disc serving as a disc-type recording medium and having a magnetic film formed on each of the two sides thereof. The hard disc drive records data on the magnetic film along predetermined recording tracks by the magnetic head mounted on the head slider arranged to float on the surface of the magnetic disc. Moreover, the hard disc drive reproduces data recorded on the magnetic film along the predetermined recording tracks.

Since the hard disc drive having the above-mentioned structure has a frame previously including a head drive portion for operating the float-type head slider having the magnetic head mounted thereon and a disc drive portion for rotating the magnetic disc, the hard disc drive is able to record data at a high density. Moreover, the hard disc drive is able to make a high speed access to recorded data.

However, crosstalk from adjacent recording track easily occurs with the conventional hard disc drive because the conventional hard disc drive has the magnetic film formed on each of the overall surfaces of the magnetic disc and having a structure that gaps are formed between the magnetic disc and the magnetic head when the recording operation or the reproducing operation is performed. To prevent the crosstalk, the guard band between recording tracks must have a relatively large width. It leads to a fact that the track pitch of the conventional hard disc drive cannot be reduced. Thus, a hard disc drive having a large capacity cannot easily be realized.

To solve the above-mentioned problem, the gap formed between the magnetic disc and the magnetic head when a recording operation or a reproducing operation is performed is required to be reduced. To minimize the gap which is formed between the magnetic disc and the magnetic head when a recording operation or a reproducing operation is performed, a system adapted to a so-called contact method has been suggested which records/reproduces data in a state in which the surface of the magnetic disc and the magnetic head mounted on the head slider are brought into contact with each other.

If the contact-type system is employed, the crosstalk can be prevented. Moreover, attenuation which takes place when a magnetic signal is transferred from the magnetic disc to the magnetic head can be prevented. Therefore, the storage capacity can be enlarged as compared with the conventional float-type system when the contact-type system is employed. Moreover, a large signal amplitude can be obtained.

To realize the contact-type system, issues must be solved. That is, satisfactory reliability between the magnetic disc and the magnetic head must be ensured. In particular, reliability against abrasion between the magnetic disc and the magnetic head must be ensured. Since the magnetic disc and the magnetic head are, in the contact-type system, brought into contact with each other, the two elements easily wear. If they wear, the signal amplitude is gradually reduced as the degree of wear develops.

To prevent wear of the magnetic disc and that of the magnetic head of the contact-type system, attention is given to a fact that the frictional force is expressed by a product of a vertical effect and a coefficient of friction. Therefore, there are two approaches below. One of the approaches is a method of reducing the load which is applied from the head slider to the magnetic disc. Another approach is a method of reducing the coefficient of friction between the magnetic disc and the magnetic head.

Hamilton et al. have suggested a method of reducing the frictional force by holding the head slider with a light load. The above-mentioned method is able to significantly reduce the amount of abrasion of the magnetic head as compared with the conventional method. Moreover, extremely high and stable output can be obtained when the magnetic head is being moved stably on the recording track. However, the foregoing method arranged to support the head slider with a light load encounters a fact that the state of the magnetic head easily becomes instable. Therefore, there arises a problem in that the output becomes instable when, for example, the magnetic head is moved to another recording track while the magnetic head continues scanning (that is, when a seeking operation is performed).

Also the method of reducing the coefficient of friction between the magnetic disc and the magnetic head has been investigated by a multiplicity of organizations. To reduce the coefficient of friction of the two elements, reduction of the area of contact of the two elements or use of lubricant must be employed. However, the size of the magnetic head having a small size cannot easily be reduced. If lubricant is used, the lubricant causes a gap to be formed between the magnetic film formed on the magnetic disc and the magnetic head. Therefore, there arises a problem in that a stable state of contact between the two elements cannot be maintained.

A contrivance has been developed in an industrial field of optical recording (including magneto-optical recording) in which an objective lens incorporating a so-called solid immersion lens is mounted on a head slider to enlarge the numerical apertures NA so as to realize high-density recording. Also in this case, there arises a problem similar to that experienced with the above-mentioned magnetic recording method.

In view of the foregoing, an object of the present invention is to provide a disc-type recording medium with which a head the disc-type recording medium can stably be in contact with each other and capable of preventing abrasion between the head and the disc-type recording medium and to provide a head slider and a recording and/or reproducing apparatus.

Disclosure of the Invention

A disc-type recording medium according to the present invention is a disc-type recording medium arranged to be recorded and/or reproduced by a recording and/or reproducing head mounted on a head slider, at least a portion of which is floated when a recording and/or reproducing operation is performed. Moreover, projections are formed on the disc and a recording and/or reproducing operation is performed in a state where the recording and/or reproducing head is in contact with the projections.

It is preferable that the disc-type recording medium has a structure that recording and/or reproducing is performed in a state in which the recording and/or reproducing head and the projections are in contact with each other without any load. It is preferable that the disc-type recording medium has a structure that the recording and/or reproducing head and the projections are brought into contact with each other without any load when at least a portion of the head slider has been floated by air flows which flow through gaps between the surface of the disc and the head slider. It is preferable that the disc-type recording medium has a structure that the projections are formed substantially in parallel to a direction in which the disc is rotated.

The disc-type recording medium having the above-mentioned structure and according to the present invention has the projections on the surface thereof and arranged to be recorded and/or reproduced in a state in which the recording and/or reproducing head is in contact with the projections. Therefore, when a recording and/or reproducing operation is performed, gaps are formed between at least portions except for the projections of the disc-type recording medium and the head slider. Air introduced into the gaps generates floating force for the head slider in such a manner that the head slider is floated. As a result, the load of the head slider which is added to the disc-type recording medium can be reduced. When the floating force and the load of the head slider are balanced with each other, the recording and/or reproducing head is brought into contact with the projections. Thus, a state is realized in which the recording and/or reproducing head is brought into contact with the projections without any load. As a result, a stable state of contact is realized between the recording and/or reproducing head and the disc-type recording medium. Moreover, abrasion between the recording and/or reproducing head and the disc-type recording medium can be prevented.

A head slider according to the present invention comprises: a recording and/or reproducing head mounted thereon and a predetermined projection and pit pattern formed on a surface thereof opposite to a disc-type recording medium. Moreover, at least a portion of the head slider is floated by air flow which flow through gaps between the head slider and the disc-type recording medium when a recording and/or reproducing operation is performed and the recording and/or reproducing head is brought into contact with the disc-type recording medium.

It is preferable that the head slider has a structure that the recording and/or reproducing head is brought into contact with the disc-type recording medium without any load when a recording and/or reproducing operation is performed. It is preferable that the head slider has a structure that the projections and pits are formed in such a manner that the recesses are formed into grooves which are substantially in parallel to a direction in which the disc-type recording medium is rotated.

The disc-type recording medium with which recording and/or reproducing is performed by the head slider may be a disc-type recording medium having the surface on which projections are formed or a disc-type recording medium having projections on the surface thereof. In a case where the disc-type recording medium which is recorded and/or reproduced is the disc-type recording medium having the projections on the surface thereof, it is preferable that the recording and/or reproducing head is brought into contact with the projections on the surface of the disc when a recording and/or reproducing operation is performed.

The head slider having the above-mentioned structure and according to the present invention has projections and pits on the surface thereof opposite to the disc-type recording medium. When a recording and/or reproducing operation is performed, at least a portion of the head slider is floated by air flows which flow through the gasp between the head slider and the disc-type recording medium. Moreover, the recording and/or reproducing head is brought into contact with the disc-type recording medium. That is, air which flows through gaps between the recesses of the head slider and the disc-type recording medium generates floating force for the head slider in such a manner that the head slider is floated. As a result, the load of the head slider which acts on the disc-type recording medium can be reduced. When the floating force and the load of the head slider are balanced with each other, the recording and/or reproducing head is brought into contact with the disc-type recording medium. Thus, a state can be realized in which the recording and/or reproducing head is in contact with the disc-type recording medium without any load. As a result, a stable state of contact can be maintained between the recording and/or reproducing head and the disc-type recording medium. Moreover, abrasion between the recording and/or reproducing head and the disc-type recording medium can be prevented.

A recording and/or reproducing apparatus according to the present invention comprises: a disc-type recording medium having the surface on which projections are formed; a head slider arranged in such a manner that at least a portion of the head slider is floated by air flows introduced into gaps between the head slider and the disc-type recording medium when a recording and/or reproducing operation is performed; and a recording and/or reproducing head mounted on the head slider. The recording and/or reproducing apparatus is characterized in that recording and/or reproducing of the disc-type recording medium is performed in a state in which the recording and/or reproducing head is in contact with the projections.

It is preferable that the recording and/or reproducing apparatus has a structure that recording and/or reproducing head is brought into contact with the projections without any load when a recording and/or reproducing operation is performed. It is preferable that the recording and/or reproducing apparatus has a structure that the projections are formed substantially in parallel to a direction in which the disc-type recording medium is rotated.

The recording and/or reproducing apparatus having the above-mentioned structure and according to the present invention records/reproduces the disc-type recording medium in a state in which the recording and/or reproducing head mounted on the head slider is in contact with the projections provided for the disc-type recording medium. Therefore, gaps are formed between at least portions except for the projections of the disc-type recording medium and the head slider when a recording and/or reproducing operation is performed. Air which flows through the gaps generates floating force for the head slider in such a manner that the head slider is floated. As a result, the load of the head slider which is added to the disc-type recording medium can be reduced. When the floating force and the load of the head slider are balanced with each other, the recording and/or reproducing head slider is brought into contact with the projections of the disc-type recording medium. Thus, a state can be realized in which the recording and/or reproducing head is in contact with the projections without any load. As a result, a stable state of contact can be maintained between the recording and/or reproducing head and the disc-type recording medium. Moreover, abrasion between the recording and/or reproducing head and the disc-type recording medium can be prevented.

A recording and/or reproducing apparatus according to the present invention comprises: a disc-type recording medium; a head slider having a projection and pit pattern on the surface thereof opposite to the disc-type recording medium; and a recording and/or reproducing head mounted on the head slider and arranged to record/reproduce the disc-type recording medium. The recording and/or reproducing apparatus is characterized in that at least a portion of the head slider is floated by air flows which flow through gaps between the head slider and the disc-type recording medium and the recording and/or reproducing head is brought into contact with the disc-type recording medium when a recording and/or reproducing operation is performed.

It is preferable that the recording and/or reproducing apparatus has a structure that the recording and/or reproducing head is brought into contact with the disc-type recording medium without any load when a recording and/or reproducing operation is performed. The disc-type recording medium of the recording and/or reproducing apparatus may have a flat and smooth surface or a surface having projections thereon. When the projections are formed on the surface of the disc-type recording medium, it is preferable that the projections are formed substantially in parallel to a direction in which the disc-type recording medium is rotated.

The recording and/or reproducing apparatus having the above-mentioned structure and according to the present invention performs a recording and/or reproducing operation in such a manner that at least a portion of the head slider is floated by air flows which flow through the gaps between the head slider and the disc-type recording medium. Moreover, the recording and/or reproducing head is brought into contact with the disc-type recording medium. As a result, the load of the head slider which is added to the disc-type recording medium can be reduced. When the floating force and the load of the head slider are balanced with each other, the recording and/or reproducing head slider is brought into contact with the projections of the disc-type recording medium. Thus, a state can be realized in which the recording and/or reproducing head is in contact with the projections without any load. As a result, a stable state of contact can be maintained between the recording and/or reproducing head and the disc-type recording medium. Moreover, abrasion between the recording and/or reproducing head and the disc-type recording medium can be prevented.

The head slider according to the present invention comprises: a recording and/or reproducing head mounted thereon and a pair of crown shape rails disposed on the surface thereof opposite to a disc-type recording medium in such a manner that the pair of crown shape rails are substantially in parallel to a direction in which the disc-type recording medium is rotated. The head slider has a structure that at least a portion of the head slider is floated by air flows which flow through gaps between the head slider and the disc-type recording medium and the recording and/or reproducing head is brought into contact with the disc-type recording medium when a recording and/or reproducing operation is performed. When an assumption is made that the length of each of the rails is L, the difference in the amount of floating between an end into which air on each of the rails is introduced and an end from which air is discharged is $\Delta d$ and a crown amount of each of the rail is C, the crown amount C of the crown shape portion satisfies the following Equation (1-1):

$$C \leq L \{L - (L^2 - \Delta d^2)^{1/2}\}/(2\Delta d) \qquad (1-1)$$

The disc-type recording medium which is recorded and/or reproduced by using the above-mentioned head slider may have projections and pits on the surface thereof. Another structure may be employed in which projections and pits are formed on the surface of the disc-type recording medium or at least either of the pair of rails has projections and pits on the surface thereof opposite to the disc-type recording medium. It is preferable that the crown amount C is 50 nm or smaller.

Since the head slider having the above-mentioned structure and according to the present invention is arranged in such a manner that the crown amount C of each rail of the head slider satisfies the above-mentioned Equation (1-1), the portions of the rails having the crown shape do not come in contact with the disc-type recording medium. Therefore, a stable state of contact can be maintained between the recording and/or reproducing head and the disc-type recording medium.

A recording and/or reproducing apparatus according to the present invention comprises: a disc-type recording medium having the surface on which projections and pits are formed; a head slider arranged in such a manner that at least a portion thereof is floated by air flows which flow through gaps between the head slider and the disc-type recording medium when a recording and/or reproducing operation is performed; and a recording and/or reproducing head mounted on a lengthwise directional end of the head slider and arranged to perform recording and/or reproducing of the disc-type recording medium in a state in which the recording and/or reproducing head is in contact with the projections of the disc-type recording medium. The head slider has a pair of crown shape rails formed on the surface thereof opposite to the disc-type recording medium in such a manner that the pair of crown shape rails are substantially in parallel to a direction in which the disc-type recording medium is rotated. When an assumption is made that the length of each of the rails is L, the difference in the amount of floating between an end into which air on each of the rails is introduced and an end from which air is discharged is $\Delta d$ and a crown amount of each of the rail is C, the crown amount C of the crown shape portion satisfies the following Equation (1-2):

$$C \leq L \{L - (L^2 - \Delta d^2)^{1/2}\}/(2\Delta d) \qquad (1-2)$$

A structure may be employed in which at least either of the pair of rails has projections on the surface thereof opposite to the disc-type recording medium. It is preferable that the crown amount C is 50 nm or smaller.

Since the head slider having the above-mentioned structure and according to the present invention is arranged in such a manner that the crown amount C of each rail of the head slider satisfies the above-mentioned Equation (1-2), the portions of the rails having the crown shape do not come in contact with the disc-type recording medium. Therefore, a stable state of contact can be maintained between the recording and/or reproducing head and the disc-type recording medium.

A head slider according to the present invention comprises: a recording and/or reproducing head mounted thereon and a pair of rails disposed on the surface thereof opposite to a disc-type recording medium in such a manner that the pair of rails are substantially in parallel to a direction in which the disc-type recording medium is rotated. The head slider is characterized in that gaps are formed between at least a portion of the pair of rails and the disc-type recording medium, at least a portion of the head slider is floated by air flows which flow through the gaps and the recording and/or reproducing head is brought into contact with the disc-type recording medium. It is preferable that the pair of rails provided for the head slider have surfaces opposite to the disc-type recording medium and inclined with respect to the surface of the disc-type recording medium or surfaces opposite to the disc-type recording medium and formed into curved surfaces. The pair of rails may have a projection and pit pattern on the surfaces thereof opposite to the disc-type recording medium. The head slider has a structure that the recording and/or reproducing head is mounted, for example, on a center line between the pair of rails or the recording and/or reproducing head is mounted on the outside of a region interposed between the pair of rails. At this time, it is preferable that the shape of the surfaces opposite to the disc-type recording medium are symmetrical with respect to the center line. It is preferable that the pair of rails are formed in such a manner that at least either of a front end or a rear end is formed into a diagonal cut portion.

With the head slider having the above-mentioned structure and according to the present invention, gaps are formed between at least a portion of the head slider and the disc-type recording medium and floating force acts in a direction in which the head slider is floated by air flows which flow through the gaps when a recording and/or reproducing operation is performed. In a state in which the floating force acts, the recording and/or reproducing head is brought into contact with the disc-type recording medium. Therefore, the head slider cannot easily be inclined by external force as a result of the influence of the air flow. Even if the head slider is inclined, an original state can quickly be restored.

A recording and/or reproducing apparatus according to the present invention comprises: a disc-type recording medium; a head slider arranged in such a manner that at least a portion thereof is floated when a recording and/or reproducing operation is performed; and a recording and/or reproducing head mounted on the head slider and arranged to perform recording and/or reproducing in a state in which the recording and/or reproducing head is in contact with the disc-type recording medium. The head slider has a pair of rails formed on a surface thereof opposite to the disc-type recording medium in such a manner that the pair of rails are substantially in parallel to a direction in which the disc-type recording medium is rotated. The head slider is characterized in that gaps are formed between at least portions of the pair of rails and the disc-type recording medium, at least a portion of the head slider is floated by air flows which flow through the gaps, and the recording and/or reproducing head is brought into contact with the disc-type recording medium when a recording and/or reproducing operation is performed.

It is preferable that the pair of rails have surfaces opposite to the disc-type recording medium and inclined with respect to the surface of the disc-type recording medium or surfaces opposite to the disc-type recording medium and formed into curved surfaces. It is preferable that the recording and/or reproducing apparatus has a structure that a projection and pit pattern is formed on the surface of the disc-type recording medium or the pair of rails have surface opposite to the disc-type recording medium and incorporating a predetermined projection and pit pattern.

The recording and/or reproducing apparatus having the above-mentioned structure and according to the present invention, with the head slider having the above-mentioned structure and according to the present invention, gaps are formed between at least a portion of the head slider and the disc-type recording medium and floating force acts in a direction in which the head slider is floated by air flows which flow through the gaps when a recording and/or reproducing operation is performed. In a state in which the floating force acts, the recording and/or reproducing head is brought into contact with the disc-type recording medium. Therefore, the head slider cannot easily be inclined by external force as a result of the influence of the air flow. Even if the head slider is inclined, an original state can quickly be restored.

Brief Description of the Drawings

FIG. 1 is a perspective view showing an essential portion of an example of the structure of a hard disc drive according to the present invention;
FIG. 2 is a diagram showing an example of a head slider and a magnetic disc for use in the hard disc drive shown in FIG. 1;
FIG. 3 is a partially-enlarged view showing an example of a head slider and a magnetic disc for use in the hard disc drive shown in FIG. 1;
FIG. 4 is a diagram showing force which is added to the head slider for use in the hard disc drive shown in FIG. 1 when a recording and/or reproducing operation is performed;
FIG. 5 is a cross sectional view showing an example of a head slider according to the present invention;
FIG. 6 is a plan view showing an example of a magnetic disc according to the present invention;
FIG. 7 is a diagram showing the cross sectional of the magnetic disc shown in FIG. 6, in which FIG. 7 (A) is a radial-directional cross sectional view and FIG. 7 (B) is a circumferential-directional cross sectional view;
FIG. 8 is a first diagram showing an example of a method of manufacturing the magnetic disc shown in FIG. 6;
FIG. 9 is a second diagram showing an example of a method of manufacturing the magnetic disc shown in FIG. 6;
FIG. 10 is a third diagram showing an example of a method of manufacturing the magnetic disc shown in FIG. 6;
FIG. 11 is a block diagram showing an example of the structure of a control unit of the hard disc drive shown in FIG. 1;
FIG. 12 is a plan view showing a measuring disc;
FIG. 13 is a perspective view schematically showing a measuring system for measuring the relationship among the number of revolutions of the measuring disc, an amount of floating of the measuring head slider and the output of a strain gauge;
FIG. 14 is a graph showing the relationship according to a first example among the number of revolutions of the measuring disc, an amount of floating of the measuring head slider and the output of a strain gauge;
FIG. 15 is a plan view showing a measuring disc;
FIG. 16 is a perspective view schematically showing a measuring system for measuring the relationship among the scanning period of the measuring head slider, the output of the strain gauge and a reproduction output of a magnetoresistance-effect head (a MR head);
FIG. 17 is a graph showing the relationship according to a second example among the scanning period of the measuring head slider, the output of the strain gauge and the reproduction output of the MR head;
FIG. 18 includes a plan view, a side view and a front view showing the measuring head slider and a schematic view showing an enlarged essential portion;
FIG. 19 is a graph showing the relationship according to a third example among the number of revolutions of the measuring disc, the amount of floating of the measuring head slider and the output of the strain gauge;

FIG. 20 is graph showing the relationship according to a fourth example among the scanning period of the measuring head slider, the output of the strain gauge and the reproduction output of the MR head;

FIG. 21 is a graph showing the relationship according to a fifth example among the number of revolutions of the measuring disc, the amount of floating of the measuring head slider and the output of the strain gauge;

FIG. 22 is a graph showing the relationship according to a sixth example among the scanning period of the measuring head slider, the output of the strain gauge and the reproduction output of the MR head;

FIG. 23 is a schematic view showing a state in which a head slider having crown shape rails and a magnetic disc are in contact with each other;

FIG. 24 is a diagram showing an example of the head slider having the crown shape rails together with the magnetic disc;

FIG. 25 is a schematic view showing a state of the head slider shown in FIG. 24 when a recording and/or reproducing operation is performed;

FIG. 26 is a graph showing force which is added on the head slider shown in FIG. 24 when a recording and/or reproducing operation is performed;

FIG. 27 is a plan view showing a measuring disc;

FIG. 28 includes a plan view, a side view and a front view showing the measuring head slider;

FIG. 29 is a graph showing a floating amount $h_2$ at the air-introduction-end point and floating amount $h_1$ at the air-discharge-end point of the measuring head slider;

FIG. 30 is a graph showing results of measurement according to a seventh example;

FIG. 31 is a diagram showing a state in which a head slider having a large crown amount C is in contact with the magnetic disc;

FIG. 32 is a diagram showing a head slider having rail surfaces which are in parallel to the surface of the disc and including FIG. 32 (A) which shows a normal state and FIG. 32 (B) which shows a state in which the head slider is inclined;

FIG. 33 is a diagram showing a head slider having rail surfaces inclined with respect to the surface of the disc and including FIG. 33 (A) which shows a normal state and FIG. 33 (B) which shows a state in which the head slider is inclined;

FIG. 34 is a diagram showing a head slider having rail surfaces formed into a circular-arc curved surfaces and including FIG. 34 (A) which shows a normal state and FIG. 34 (B) which shows a state in which the head slider is inclined;

FIG. 35 is a cross sectional view showing an example of a head slider having rail surfaces inclined with respect to the surface of the disc;

FIG. 36 is a cross sectional view showing an example of a head slider having rail surfaces formed into a circular-arc curved shape;

FIG. 37 is a cross sectional view showing an example of a head slider having the overall body formed into an inclined surface with respect to the surface of the disc and a predetermined projection and pit pattern on each of the rail surfaces;

FIG. 38 is a cross sectional view showing an example of a head slider having the overall body formed into a circular-arc curved shape and a predetermined projection and pit pattern on each of the rail surfaces;

FIG. 39 is a cross sectional view showing an example of the magnetic disc;

FIG. 40 is a cross sectional view showing an example of the magnetic disc having the surface on which a predetermined projection and pit pattern is formed;

FIG. 41 is a schematic view showing air flows which are generated between the head slider shown in FIG. 35 and the magnetic disc;

FIG. 42 includes a plan view, a side view and a front view showing an example of a head slider on which the magnetic head is mounted;

FIG. 43 includes a plan view, a side view and a front view showing another example of the head slider on which the magnetic head is mounted;

FIG. 44 includes a plan view, a side view and a front view showing another example of the head slider on which the magnetic head is mounted;

FIG. 45 includes a plan view, a side view and a front view showing a measuring head slider;

FIG. 46 is a graph showing the relationship according to an eighth example among the number of revolutions of a measuring disc, the amount of floating of the measuring head slider and the output of the strain gauge;

FIG. 47 is a plan view showing the measuring disc;

FIG. 48 is a graph showing the relationship according to a ninth example among the number of revolutions of a measuring disc, the amount of floating of the measuring head slider and the output of the strain gauge;

FIG. 49 is a perspective view schematically showing a measuring system for measuring the relationship between the seeking time and the amount of inclination of the measuring head slider;

FIG. 50 is a graph showing a speed profile for use when the head slider performs seeking according to tenth and eleventh examples;

FIG. 51 is a diagram showing the relationship according to the tenth and eleventh examples between the seeking time and the amount of inclination of the measuring head slider;

FIG. 52 is a perspective view schematically showing a measuring system for measuring change in the amount of inclination when the measuring head slider restores the moving attitude;

FIG. 53 is a graph showing a speed profile for use when the head slider performs seeking according to the twelfth and thirteenth examples; and

FIG. 54 is a graph showing change in the amount of inclination when the measuring head slider restores the moving attitude according to the twelfth and thirteenth examples.

Best Mode for Carrying Out the Invention

Embodiments of the present invention will now be described with reference to the drawings.

Although the invention has been described in its preferred form, it is understood that the present disclosure of the preferred form can be changed so far as there is no description of limitation of the present invention in the following description.

Although a hard disc drive, into which a magnetic disc has been loaded, will be described, the present invention may widely be applied to a structure in which a head slider is used to perform a recording and/or reproducing operation. That is, the present invention may be applied to a structure in which a magnetic head mounted on a head slider is used to record/reproduce a flexible disc. Moreover, the present invention may be applied to an industrial field of an optical recording (including magneto-optical recording). That is, the present invention may be applied to a structure in which an objective lens forming an optical head is mounted on a head slider to cause the objective lens and an optical disc to come closer to each other or brought into contact with each other to enlarge the numerical aperture NA so as to perform high-density recording. In this case, the head slider to which the present invention is applied is a head slider on which an objective lens for forming the optical head is mounted and a disc-type recording medium to which the present invention is applied is an optical disc.

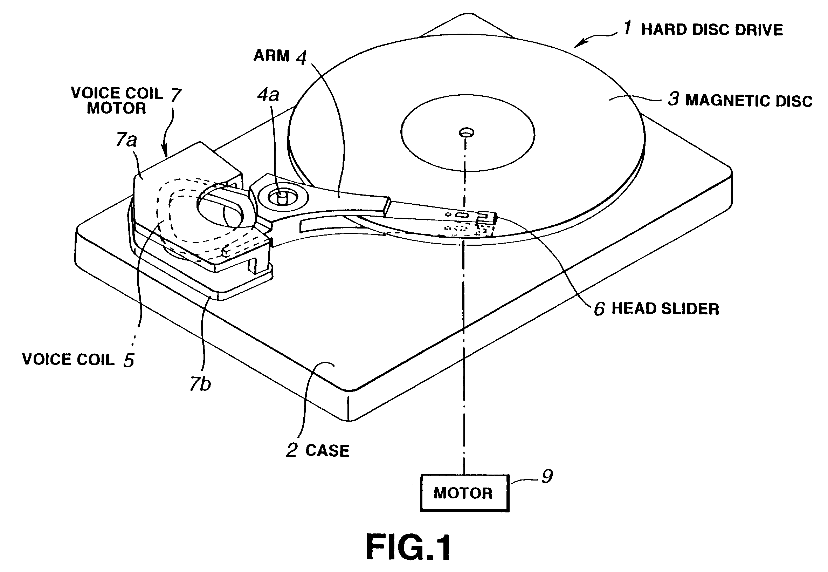

FIG. 1 is a perspective view showing a hard disc drive 1 according to the present invention.

The hard disc drive 1 has a structure that a spindle motor 9 is disposed on the reverse side of a flat portion of a case 2 made of aluminum alloy or the like. Moreover, the hard disc drive 1 is provided with a magnetic disc 3 which is rotated by the spindle motor 9 at predetermined speed (for example, constant angular velocity or constant linear velocity). Moreover, an arm 4 is joined to the case 2 in such a manner as to be capable of rotating and moving around a vertical shaft 4a. A voice coil 5 is joined to an end of the arm 4, while a head slider 6 is joined to another end of the arm 4. A cover yoke 7a and a bottom yoke 7b are joined on the case 2 in such a manner as to hold the voice coil 5 between the cover yoke 7a and the bottom yoke 7b. A magnet (not shown) is joined to the bottom yoke 7b. The voice coil 5, the cover yoke 7a, the bottom yoke 7b and the magnet form a voice coil motor 7.

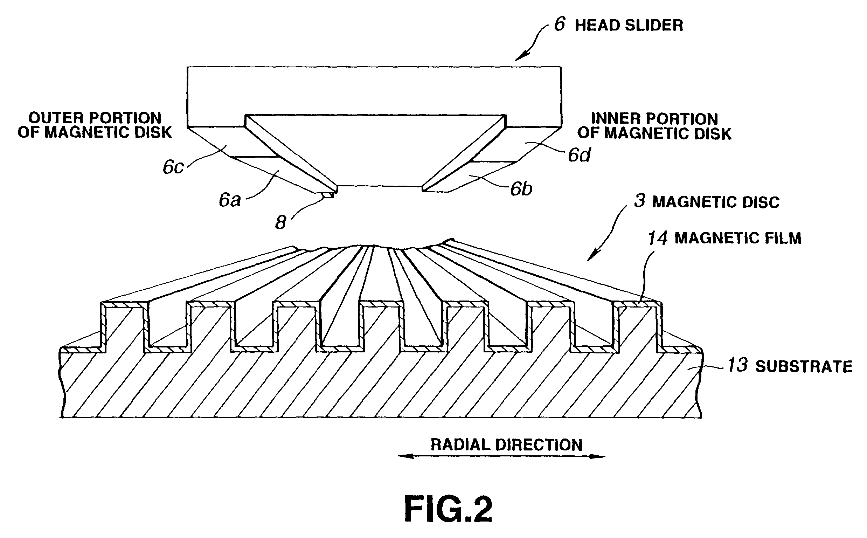

As shown in FIG. 2, the magnetic disc 3 has a magnetic film 14 formed on a substrate 13 on which projections and pits are formed on the surface of the substrate 13. Projections and pits corresponding to the projections and pits formed on the substrate 13 are formed on the surface of the magnetic disc 3 in a direction in parallel to a direction in which the head slider 6 is moved. The projections and pits are formed concentrically to one another on the surface of the magnetic disc 3. When the recording track of the magnetic disc 3 is formed into a spiral shape, the projections and pits are formed into a spiral configuration running along the recording track.

As shown in FIG. 2, rails 6a and 6b serving as air bearing surfaces are formed on the two sides of the lower surface of the head slider 6. Moreover, tapered portions 6c and 6d are formed at the leading ends of the rails 6a and 6b. A magnetic head 8 is mounted on a rear surface of the rail 6a.

When the spindle motor 9 of the hard disc drive 1 having the above-mentioned structure has been rotated, the magnetic disc 3 is rotated at predetermined speed to follow the rotations of the spindle motor 9. When an electric current is supplied to the voice coil 5 from outside, the arm 4 is rotated about the vertical shaft 4a by dint of a magnetic field generated by the cover yoke 7a, bottom yoke 7b and the magnet and force generated by the electric current allowed to pass through the voice coil 5. As a result, the head slider 6 joined to the other end of the arm 4 is moved in substantially the radial direction of the magnetic disc 3 while sliding on the surface of the magnetic disc 3 which is being rotated. Thus, the magnetic head 8 mounted on the head slider 6 performs an operation for seeking the magnetic disc 3.

When the magnetic disc 3 is rotated, air is introduced from a position adjacent to the tapered portions 6c and 6d formed at the leading ends of the rails 6a and 6b of the head slider 6. Introduced air is allowed to flow along the rails 6a and 6b, and then introduced into a space between the head slider 6 and the magnetic disc 3. Introduced air is discharged from the rear ends of the rails 6a and 6b. The air flows generate force for floating the head slider 6 so that the head slider 6 is floated from the surface of the magnetic disc 3 for a small distance when the head slider 6 is moved. That is, the gap from the head slider 6 to the surface of the magnetic disc 3 is reduced in a direction from the leading end to the rear end in a direction of movement. Thus, the floating force is realized because of the air flows in the gap so that the head slider 6 is floated above the surface of the magnetic disc 3.

If no gap is formed between the head slider 6 and the surface of the magnetic disc 3, no air flows between the head slider 6 and the magnetic disc 3. Therefore, the head slider 6 is not floated, causing the magnetic head 8 and the magnetic disc 3 to be brought into contact with each other. If no gap is formed between the head slider 6 and the surface of the magnetic disc 3 and thus the magnetic head 8 and the magnetic disc 3 are brought into contact with each other, the load of the head slider 6 is directly applied to the magnetic disc 3. In this case, the problem of abrasion between the magnetic head 8 and the magnetic disc 3 as described in the background art arises.

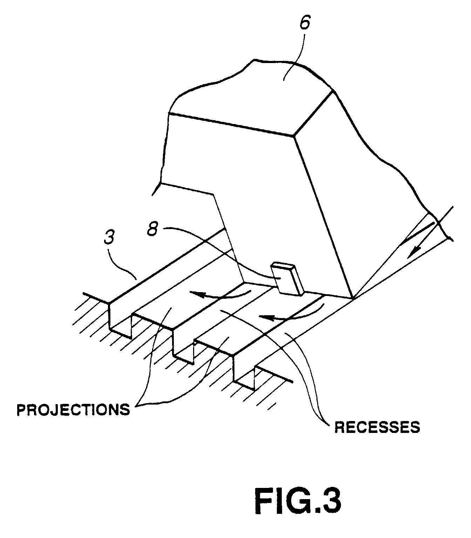

Accordingly, projections and pits are formed on the magnetic disc 3, as shown in FIG. 3 so that air flows are generated in small gaps between the recesses of the magnetic disc 3 and rear ends of the rails 6a and 6b of the head slider 6. While the floating state between the magnetic disc 3 and the head slider 6 is maintained by dint of the generated air flows, the amount of floating of the head slider 6 is reduced until the gaps between the head slider 6 and the projections of the magnetic disc 3 are gone. As a result, the magnetic head 8 can be brought into contact with the projections of the magnetic disc 3 without load. Thus, even if the magnetic head 8 and the surface of the magnetic disc 3 are in contact with each other, abrasion between the magnetic head 8 and the magnetic disc 3 can be prevented.

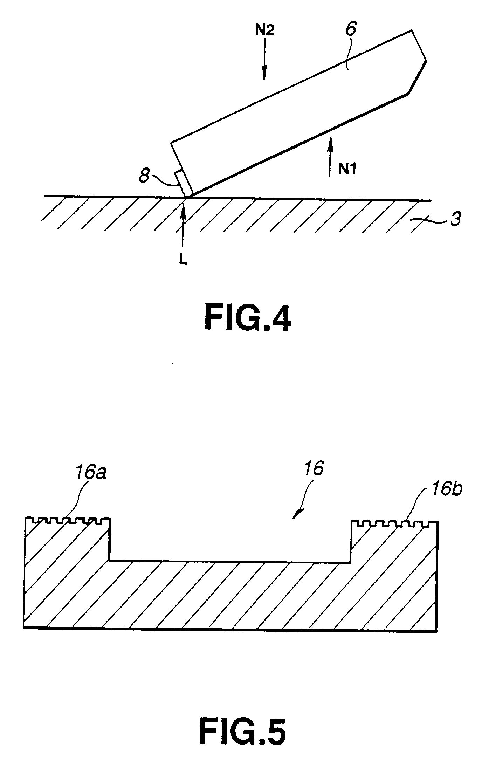

That is, the above-mentioned head slider 6 and the magnetic disc 3 are arranged in such a manner that the air flows introduced from the tapered portions 6c and 6d along the rails 6a and 6b when the magnetic head 8 has been brought into contact with the projections are discharged through the small gaps formed between the recesses of the magnetic disc 3 and the rear ends of the rails 6a and 6b. Therefore, floating force N1 is generated for the head slider 6 in a direction in which the head slider 6 is floated, as shown in FIG. 4. When floating force N1 and load N2 of the head slider 6 are balanced with each other, vertical drag L acting from the projections of the magnetic disc 3 on the magnetic head 8 is therefore made to be zero. As a result, the frictional force between the magnetic head 8 and the surface of the magnetic disc 3 can be made to be zero. Therefore, abrasion between the magnetic head 8 and the magnetic disc 3 can be prevented while the magnetic head 8 and the surface of the magnetic disc 3 are brought into contact with each other.

When data is recorded on the magnetic disc 3, the projections serve as recording tracks. As a result, data can be recorded and reproduced in a state in which the magnetic head 8 and the magnetic disc 3 are always in contact with each other. As a result, the recording/reproducing efficiency can significantly be improved as compared with the conventional hard disc drive arranged to perform recording and reproducing operations in such a manner that the magnetic head is floated. Since the recesses serve as the guard bands when the projections serve as the recording tracks, also crosstalk can considerably be reduced.

When the hard disc drive 1 according to the present invention is adapted to a magnetic disc having a flat and smooth surface in place of the magnetic disc 3 having the above-mentioned projections and pits on the surface thereof, use of the head slider 16 structured as shown in FIG. 5 enables the above-mentioned effect to be obtained. Rails 16a and 16b of the head slider 16 have projections and pits in the form of a predetermined pattern and formed on surfaces (hereinafter called as "rail surfaces") opposite to the magnetic disc, as shown in FIG. 5. Note that the predetermined projection and pit pattern may be formed on only either of the pair of the rails 16a and 16b.

The head slider 16 having the above-mentioned structure attains the above-mentioned effect. That is, air flows are generated in the gaps between the recesses formed in the rails 16a and 16b of the head slider 16 and the surface of the magnetic disc having the flat and smooth surface, the air flows being similar to the air flows which flow through the gaps between the recesses of the magnetic disc 3 having the projections and pits and the head slider 6. Therefore, also the head slider 16 enables the magnetic head mounted on the head slider 16 to be brought into contact with the magnetic disc while at least a portion of the head slider 16 is floated by dint of the air flows which flow in the gaps between the head slider 16 and the magnetic disc.

Even if the magnetic disc having the flat and smooth surface is employed, use of the head slider 16 incorporating the rails 16a and 16b having the projections and pits in the form of a predetermined pattern and formed on the surfaces opposite to the magnetic disc enables abrasion between the magnetic head and the magnetic disc to be prevented. The prevention is enabled while the magnetic head and the surface of the magnetic disc are in contact with each other similarly to the structure in which the magnetic disc 3 having the projections and pits formed on the surface thereof.

The magnetic disc 3 having the projections and pits on the surface thereof will now be described.

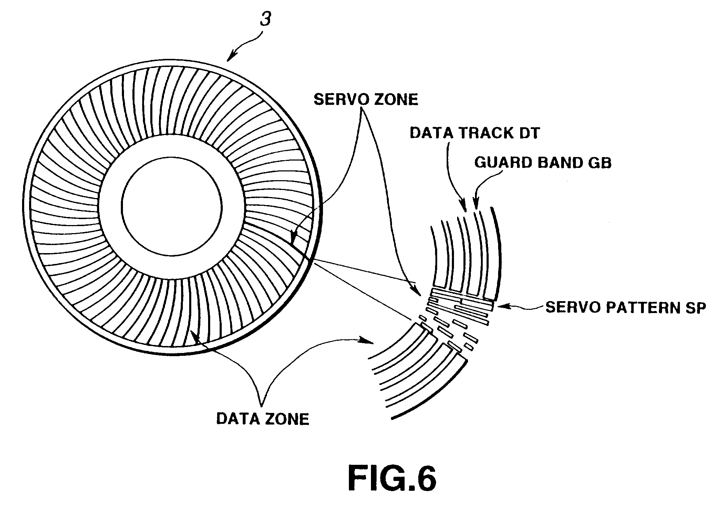

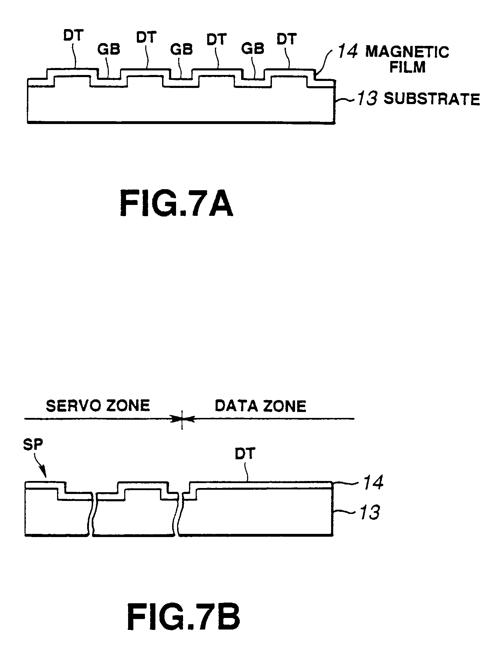

FIG. 6 is a plan view showing the magnetic disc 3 according to the present invention and an enlarged portion of the same. FIG. 7(A) is a diagram showing a cross sectional structure of the magnetic disc 3 in the radial direction of the same. FIG. 7(B) is a diagram showing a cross sectional structure of the magnetic disc 3 in the circumferential direction of the same.

A substrate 13 of the magnetic disc 3 is made of, for example, synthetic resin, glass or aluminum. The substrate 13 has projections and pits corresponding to data recording region (data zones) and a control-signal-recording region (a servo zone), respectively. A magnetic film 14 is formed on the surface of the substrate 13. Note that the data zones and the servo zone are arranged in such a manner that a servo zone appears at predetermined intervals when a recording operation or a reproducing operation is performed by forming the servo zone, for example, radially from the center of the magnetic disc 3, as shown in FIG. 6.

Data tracks DT for recording arbitrary data and guard bands GB for distinguishing the adjacent data tracks DT are concentrically formed in the data zones. The magnetic disc 3 has projections and pits in such a manner that the data tracks DT are the projections and the guard bands GB are the recesses. The projections and pits must be formed in parallel to the direction (that is, the direction of the recording tracks) in which the head slider 6 is moved. When a spiral recording track is formed, spiral projections and pits are formed along the recording tracks. The projections and pits may be formed in such a manner that the projections are continuously formed in the circumferential direction or sectioned to an extent that an adverse influence is not exerted on the movement of the head slider 6.

On the other hand, a gray code for identifying the data tracks DT, a clock mark serving as a reference when the servo clock is generated and a servo pattern SP for use to control a tracking operation of the magnetic head 8. The servo zone has projections and pits which are magnetized in opposite directions. As a result, the foregoing servo pattern SP is recorded.

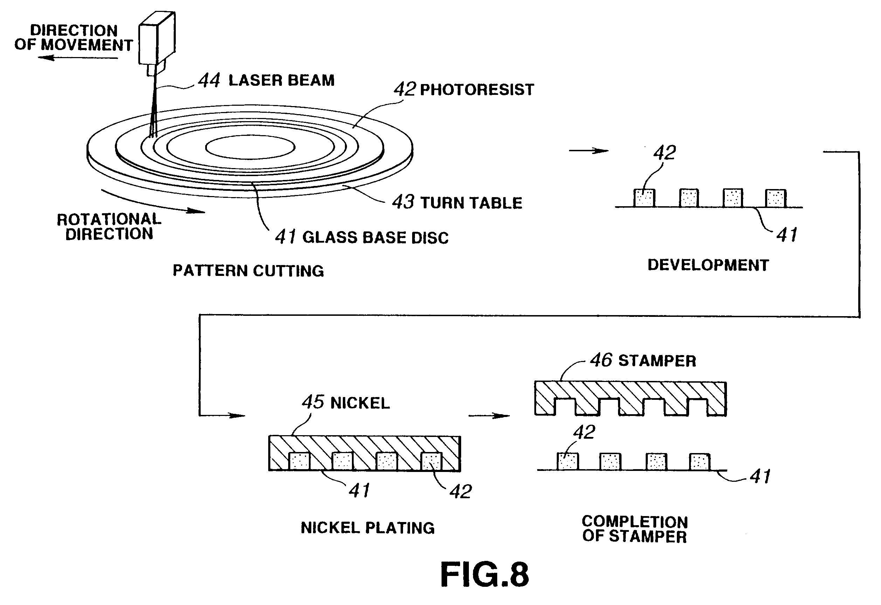

The above-mentioned magnetic disc 3 is manufactured by using, for example, an optical technique. An example of a manufacturing method will now be described with reference to FIGS. 8 to 10.

As shown in FIG. 8, the surface of a glass substrate 41 is coated with a photoresist 42. The glass substrate 41 coated with the photoresist 42 is placed on a turntable 43, and then rotated. Then, portions of the photoresist 42 on which, for example, the recesses will be formed, are irradiated with laser beams 44 so that pattern cutting is performed. After the laser beams 44 have been applied, the photoresist 42 is developed, and then exposed portions of the photoresist 42 are removed. The surface of the glass substrate 41, from which the exposed portions of the photoresist 42 have been removed, is plated with nickel 45. The nickel 45 is separated from the glass substrate 41 so that a stamper 46 is formed.

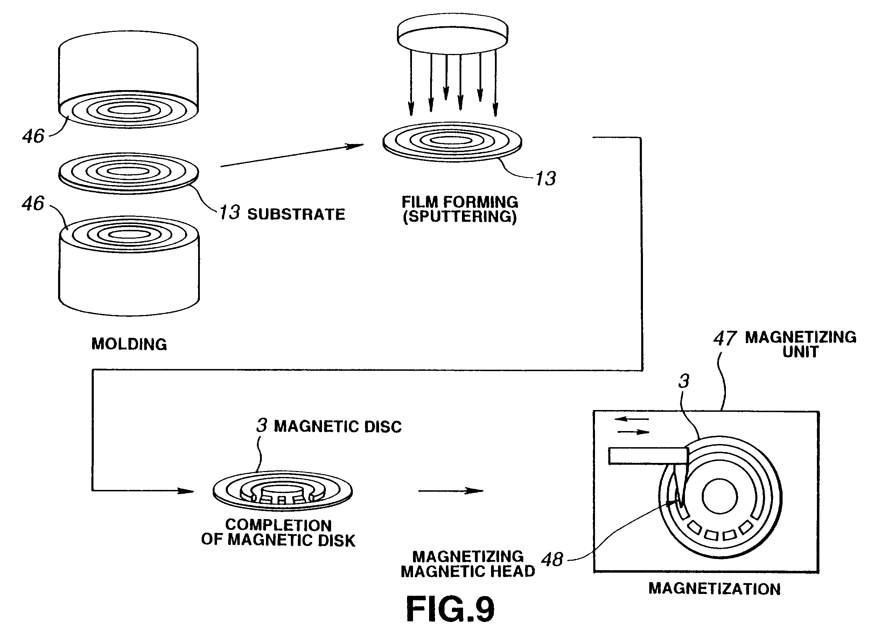

Then, the stamper 46 is used so that the substrate 13 is molded, as shown in FIG. 9. Then, the magnetic film 14 is formed on the surface of the substrate 13 by sputtering or the like so that the magnetic disc 3 is manufactured. Then, a magnetizing magnetic head 48 of a magnetizing unit 47 is operated so that the magnetic disc 3 is magnetized.

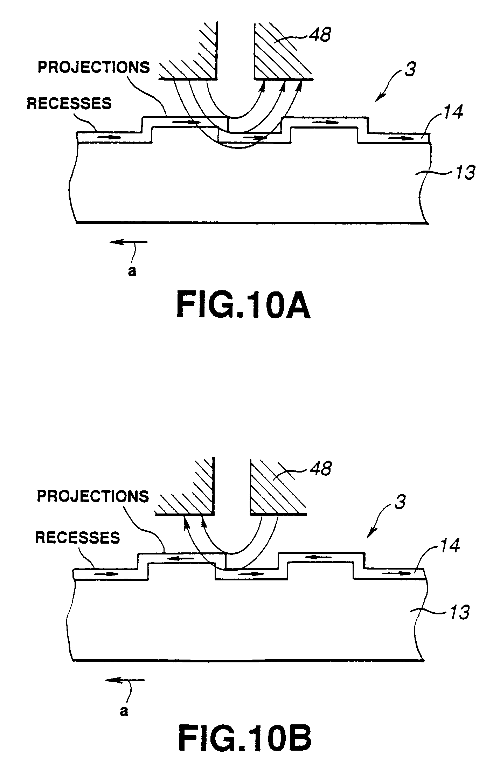

To magnetize the magnetic disc 3, the magnetic disc 3 is set to the magnetizing unit 47. Then, the magnetic disc 3 is rotated, for example, as indicated with an arrow a shown in FIG. 10. While a first DC current is supplied to the magnetizing magnetic head 48, the magnetizing magnetic head 48 is moved at predetermined track pitches in the radial direction of the magnetic disc 3, as shown in FIG. 10 (A). Thus, the magnetic film 14 in the projections and pits of the magnetic disc 3 are magnetized in the same direction.

Then, a second DC current having a polarity opposite to that of the first DC current and a value smaller than that of the first DC current is supplied to the magnetizing magnetic head 48. In this state, the magnetizing magnetic head 48 is moved in the radial direction of the magnetic disc 3 at predetermined track pitches. Thus, only the magnetic film 14 on the projections and pits of the magnetic disc 3 is magnetized in the opposite direction so that the servo pattern SP (including the gray code, the clock mark and wobbled mark and the like) is written.

As an alternative to the above-mentioned method of manufacturing the magnetic disc 3, a method may be employed in which, for example, the magnetic film 14 is formed on the substrate 13, after which the magnetic film 14 is etched so that the projections and pits are formed.

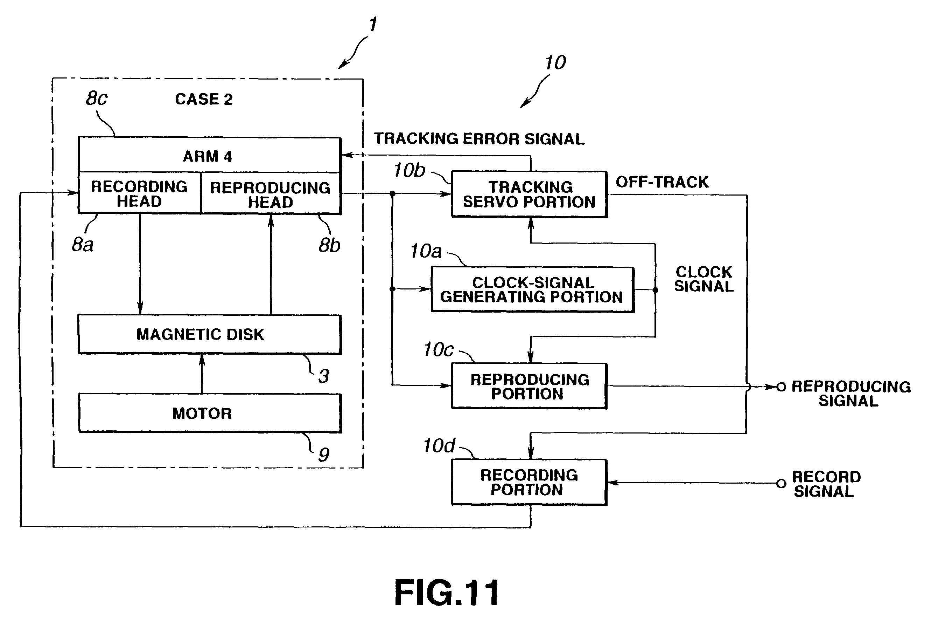

A block diagram of an example of the structure of a control unit of the hard disc drive 1 having the above-mentioned magnetic disc 3 is shown in FIG. 11. In this case, the magnetic head 8 incorporates a recording head 8a for only a recording operation and a reproducing head 8b for only a reproducing operation.

A clock-signal-generating portion 10a of a control unit 10 is supplied with a signal reproduced from the magnetic disc 3, which is rotated by the spindle motor 9, by the reproducing head 8b so as to generate a clock signal from the supplied signal. Then, the clock-signal-generating portion 10a produces an output of the clock signal to the tracking servo portion 10b and a reproducing portion 10c. The tracking servo portion 10b makes a reference to the clock signal supplied from the clock-signal-generating portion 10a to generate a tracking error signal in response to a signal supplied from the reproducing head 8b so as to operate the arm 4 to correspond to the tracking error signal. As a result, tracking control is performed in such a manner that the recording head 8a and the reproducing head 8b are brought to predetermined radial direction of the magnetic disc 3. A recording portion 10d modulates a record signal supplied from an external circuit (not shown) so as to record the record signal on the magnetic disc 3 through the recording head 8a. On the other hand, the reproducing portion 10c demodulates a reproduction signal supplied from the reproducing head 8b so as to transmit the signal to an external circuit (not shown). Moreover, the tracking servo portion 10b monitors the tracking error signal. Thus, if, for example, the hard disc drive 1 is shocked greatly and thus the recording head 8a is separated from the recording track, that is, if, for example, an off-track state has been realized, the tracking servo portion 10b controls the recording portion 10d to interrupt the recording operation.

Results of experiments to which the prototype head slider and the like of the hard disc drive having the above-mentioned structure were subjected will now be described.

⟨Example 1⟩

The relationship between the number of revolutions of the disc and the amount of floating of the head slider and the relationship between the number of revolutions of the disc and the frictional force acting on the head slider were examined by the following method.

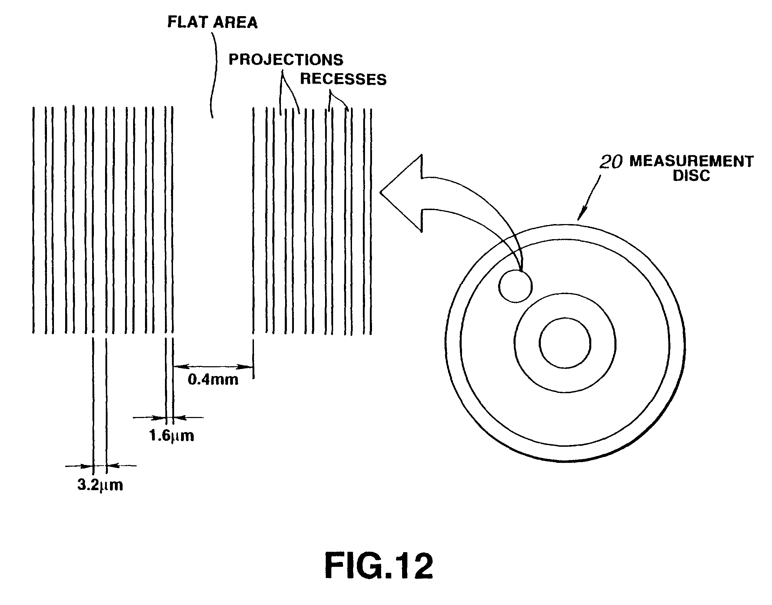

A measurement disc 20 was a glass disc having a pattern formed as shown in FIG. 12. The measurement disc 20, as shown in FIG. 12, has recesses each having a width of 1.6 μm and projections each having a width of 3.2 μm which are formed concentrically. The pattern composed of the recesses and the projections is formed in an area on the measurement disc 20 from a radius of 15.5 mm to 30.5 mm. However, a flat area having a width of 0.4 mm and arranged to measure the amount of floating of the measuring head slider is formed adjacent to the central portion of the above-mentioned pattern.

When the measurement disc 20 was manufactured, photoresist was initially applied to the surface of the glass disc. Then, the photoresist was exposed to light along predetermined projection and pit pattern in accordance with cutting data. Then, the photoresist was developed so that a mask pattern was formed. Then, the glass disc was subjected to reactive ion etching (RIE) so that the above-mentioned projection and pit pattern was formed.

The measuring head slider was a nano slider having two rails and formed into a taper flat shape. The length of the slider was 2.0 mm, the width of the slider was 1.6 mm and the width of the rail was 200 μm. The load was 3.5 gf. A measuring rail having a width of 50 μm was disposed on the center line of the measuring head slider. Since the measuring rail has a sufficiently small width as compared with the two side rails, substantially no influence is exerted on floating of the measuring head slider.

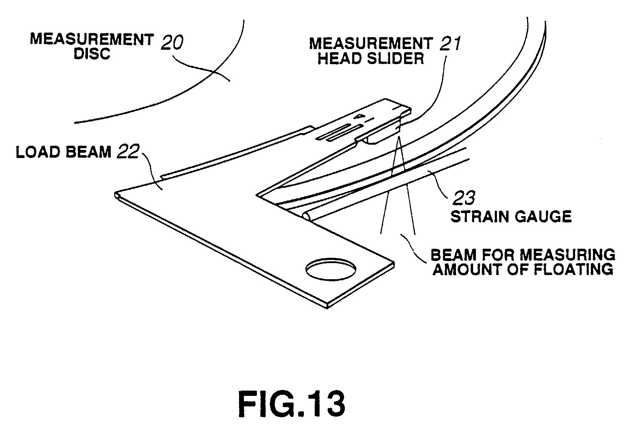

The measuring system is schematically shown in FIG. 13. The measuring system has a laser vibrometer for measuring the amount of floating until the measuring head slider 21 comes in contact with the surface of the measurement disc 20. The frictional force acting on the measurement head slider 21 when the measurement head slider 21 has been brought into contact with the surface of the measurement disc 20 is measured by a strain gauge 23 mounted on the load beam 22.

The following measurement was performed by the above-mentioned measuring system by using the measurement head slider 21 and the measurement disc 20.

Initially, the measurement disc 20 was rotated at a number of revolutions with which the measurement head slider 21 was sufficiently floated. Then, a beam for measuring the amount of floating emitted from the laser vibrometer was applied to the measurement head slider 21 through the flat area of the measurement disc 20 so as to detect returned light. Thus, the number of revolutions of the measurement disc 20 was gradually reduced while the amount of floating of the measurement head slider 21 was measured. The amount of floating of the measurement head slider 21 was measured until the measurement head slider 21 was brought into contact with the surface of the measurement disc 20. Moreover, outputs from the strain gauge 23 observed before and after the measurement head slider 21 was brought into contact with the surface of the measurement disc 20 were measured. Note that the rotations of the measurement disc 20 were performed in a servo manner and the number of revolutions of the measurement disc 20 was accurately reduced as time elapsed. The number of revolutions of the measurement disc 20 was detected in accordance with time taken from start of the measurement. Thus, the amount of floating of the measurement disc 20 and the value of the strain gauge at a predetermined number of revolutions were measured.

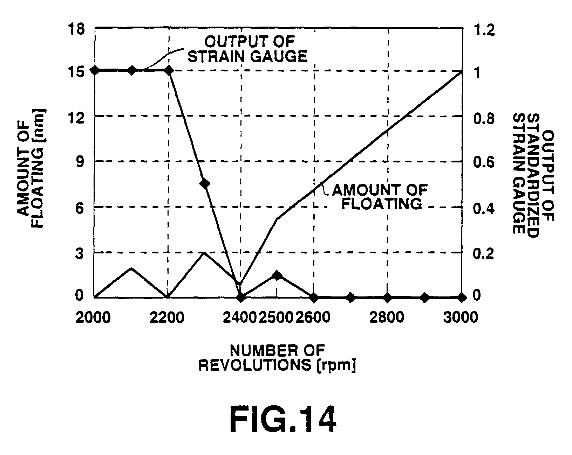

As described above, the relationship between the number of revolutions of the measurement disc 20 and the amount of floating of the measurement head slider 21 and the relationship between the number of revolutions of the measurement disc 20 and the output of the strain gauge 23 were measured. Results were shown in FIG. 14.

As shown in FIG. 14, the amount of floating of the measurement head slider 21 was about 15 nm when the number of revolutions of the measurement disc 20 was 3000 rpm. When the number of revolutions was gradually reduced, the amount of floating was linearly reduced. When the number of revolutions was about 2500 rpm, the amount of floating was about 5 nm. When the number of revolutions was not larger than 2500 rpm, disorder of the amount of floating started. The output of the strain gauge 23 was zero when the number of revolutions of the measurement disc 20. When the number of revolutions was made to be 2500 rpm or smaller, output was started. When the number of revolutions was 2200 rpm, the output was saturated.

The amount of floating of the measurement head slider 21 was a standard amount of floating for a head slider for a hard disc drive. As can be understood from results shown in FIG. 14, the contact of the measurement head slider 21 with the surface of the measurement disc 20 actually starts when the number of revolutions of the measurement disc 20 is about 2500 rpm because change in floating of the measurement head slider 21 and a glide height of the measurement disc 20 must be estimated.

That is, when the number of revolutions of the measurement disc 20 is larger than 2500 rpm, the load of the measurement head slider 21 is borne by a floating force generated by air flows introduced between the measurement head slider 21 and the recesses of the measurement disc 20. If the number of the measurement disc 20 is made to be smaller than 2500 rpm, the floating force generated by the air flows introduced between the measurement head slider 21 and the recesses of the measurement disc 20 is insufficient to bear the load of the measurement head slider 21. Therefore, the measurement head slider 21 is borne by the above-mentioned floating force and the projections and pits of the measurement disc 20. When the number of revolutions of the measurement disc 20 is made to be 2200 rpm or smaller, the load of the measurement head slider 21 is substantially fully borne by the projections of the measurement disc 20.

As can be understood from the above-mentioned fact, when the number of revolutions of the measurement disc 20 is about 2500 rpm, a state is realized in which the load of the measurement head slider 21 is borne by the floating force generated by the air flows introduced into the gaps between the measurement head slider 21 and the measurement disc 20 while the measurement head slider 21 is in contact with the measurement disc 20. That is, when the number of revolutions of the measurement disc 20 is made to be about 2500 rpm, the magnetic head mounted on the measurement head slider 21 can be brought into contact with the measurement disc 20 without load.

⟨Second Example⟩

Then, change in the frictional force acting on the head slider and change in the output of the magnetic head when the head slider was scanned in the radial direction of the magnetic disc were examined.

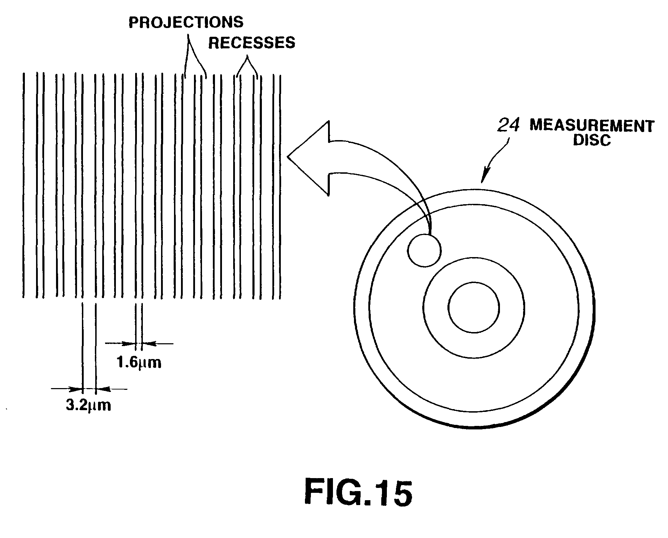

A measurement disc 24 was a magnetic disc having a glass disc, on which a pattern as shown in FIG. 15 was formed and which has a surface on which a magnetic film and the like were formed. That is, the measurement disc 24, as shown in FIG. 15, has recesses each having a width of 1.6 μm and projections each having a width of 3.2 μm which are regularly and concentrically formed. The projection and pit pattern is formed in an area on the measurement disc 24 in a range from a radius of 15.5 mm to 20.5 mm. The measurement disc 24 is different from the measurement disc 20 shown in FIG. 12 in that the flat area for measuring the amount of floating is not formed.

When the measurement disc 24 was manufactured, a sputtering method was employed to sequentially form, on the surface of the glass disc having the above-mentioned projection and pit pattern, base films composed of a 100 nm Cr film, a 20 nm CoPt film serving as a magnetic film and a 30 nm C film serving as a protective film. Then, a lubricant was applied by a dipping method to have a thickness of 2 nm.

The measuring head slider was a taper flat nano slider having two rails. The length of the slider was 2.0 mm, the width of the slider was 1.6 mm and the width of the rail was 200 μm. The load was 3.5 gf. A recording inductive head and a reproducing magnetoresistance-effect head (a MR head) were mounted on the rail of the two rails of the measuring head slider disposed outer portion of the disc.

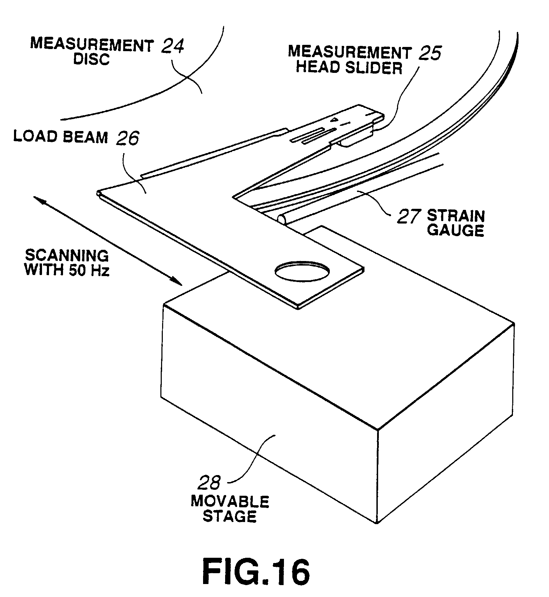

The measuring system is schematically shown in FIG. 16. The measuring system is arranged in such a manner that the frictional force acting on a measurement head slider 25 when the measurement head slider 25 has been brought into contact with the surface of the measurement disc 24 is measured by a strain gauge 27 mounted on a load beam 26. Note that the measurement head slider 25 is able to perform scanning in the radial direction of the measurement disc 24 by a movable stage 28 on which the load beam 26 is mounted.

The measurement was performed as follows by the above-mentioned measuring system using the measurement head slider 25 and the measurement disc 24.

In a state in which the measurement head slider 25 was in contact with the surface of the measurement disc 24, the measurement disc 24 was rotated at a number of revolutions with which the vertical drag in the contact portion is made to be zero. Note that the number of revolutions can be obtained from FIG. 14 showing results of the experiment according to the first example.

Then, while the measurement head slider 25 is caused to scan an area of a radius of 20 mm to 25 m of the measurement disc 24 at a frequency of 50 Hz, the output of the strain gauge 27 is measured. Moreover, a reproduction output of the MR head was measured.

When the vertical drag in the contact portion of the measurement head slider 25 and the measurement disc 24 is made not to be zero because of the scanning performed by the measurement head slider 25, frictional force is generated. Therefore, an output is made from the strain gauge 27. When scanning performed by the measurement head slider 25 causes the state of contact between the measurement head slider 25 and the surface of the measurement disc 24 to be instable, the reproduction output of the MR head is made to be instable.

Since the measurement head slider 25 scans in a direction perpendicular to the circumferential direction of the projection and pit portion of the measurement disc 24 (that is, in the radial direction of the disc), the MR head alternately reproduces the recess portion and the projection portion of the measurement disc 24. As a matter of course, the reproduction output of the MR head is enlarged when the projection portion is reproduced. The reproduction output is reduced when the recess portion is reproduced. However, the stability of the reproduction output of the MR head must be observed. In this example, only the reproduction output produced when the projection portion is being reproduced is paid attention among the reproduction outputs from the MR head.

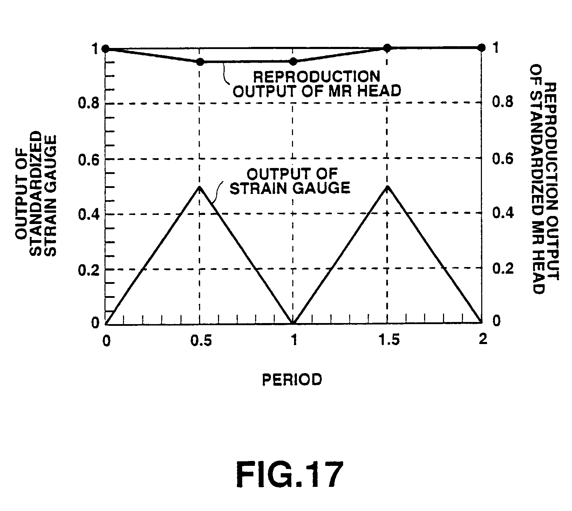

Results of the above-mentioned experiment are shown in FIG. 17. FIG. 17 is a graph showing the relationship between the scanning period of the measurement head slider 25 and the output of the strain gauge 27 and the relationship between the scanning period of the measurement head slider 25 and the reproduction output of the MR Head.

As shown in FIG. 17, the reproduction output of the MR head was substantially constant even if the measurement head slider 25 performs scanning.

As can be understood from a comparison with FIG. 14, the output of the strain gauge 27 was about 1/5 of the output of the strain gauge 23 produced when the load of the measurement head slider 21 is completely added to the surface of the measurement disc 20. However, the output was not zero. The reason for this will now be described. Since the measurement head slider 25 is formed into the taper flat shape having the two rails, the amount of floating varies depending on the radial position of the disc. Therefore, the floating force generated by the air flows introduced between the measurement head slider 25 and the recesses of the measurement disc 24 and the load of the measurement head slider 25 do not balance with each other in the direction toward the outer end of the disc. Thus, the measurement head slider 25 is undesirably brought into contact with the projections of the measurement disc 24 with a load. Therefore, if, for example, a so-called TPC slider or the like, the amount of floating of which does not depend on the radial position of the disc, is employed, the above-mentioned problem can be prevented. Thus, the output of the strain gauge 27 can be made to always be zero.

As can be understood from the results in the first and second examples, use of the magnetic disc having the surface on which projections are formed enables recording/reproducing operation to be performed in a state in which the magnetic head is in contact with the surface of the disc without no load. Therefore, abrasion between the magnetic head and the magnetic disc can be prevented and satisfactory recording/reproducing characteristic can be realized.

〈Third Example〉

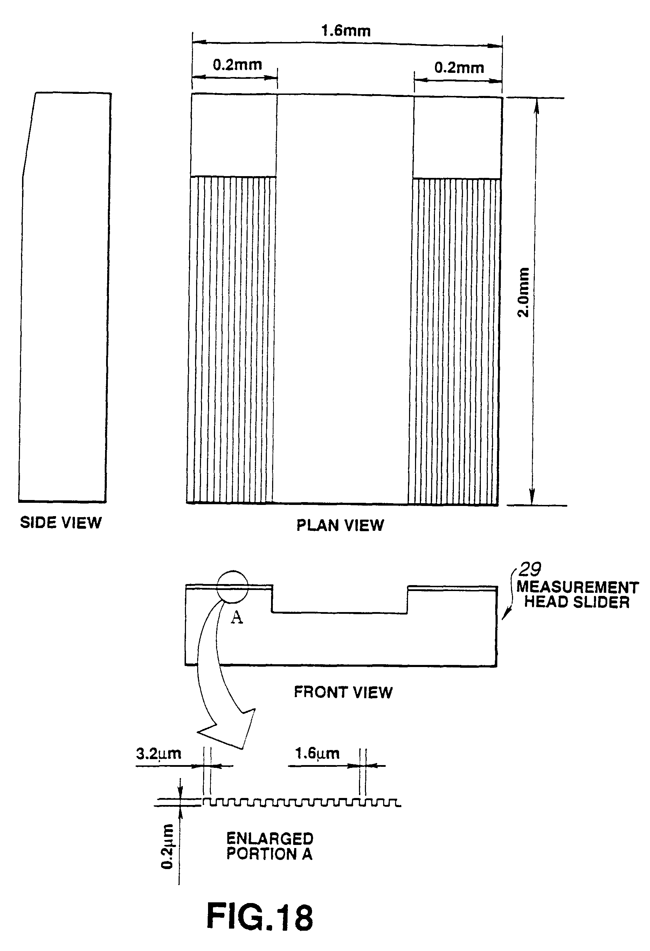

In this example, a measurement head slider 29 was employed which had predetermined projection and pit pattern as shown in FIG. 18. The measurement head slider 29 was a taper flat nano slider having two rails. The length of the slider was 2.0 mm, the width of the slider was 1.6 mm and the width of the rail was 200 μm. The load was 3.5 gf. Recesses each having a width of 1.6 μm and projections each having a width of 3.2 μm are formed on the surface of each rail. The projection and pit pattern are regularly formed on the surface of the rail of the measurement head slider 29 in such a manner as to be in parallel to the longer side of the rail.

A glass disc having a flat and smooth surface was employed to serve as the measuring disc.

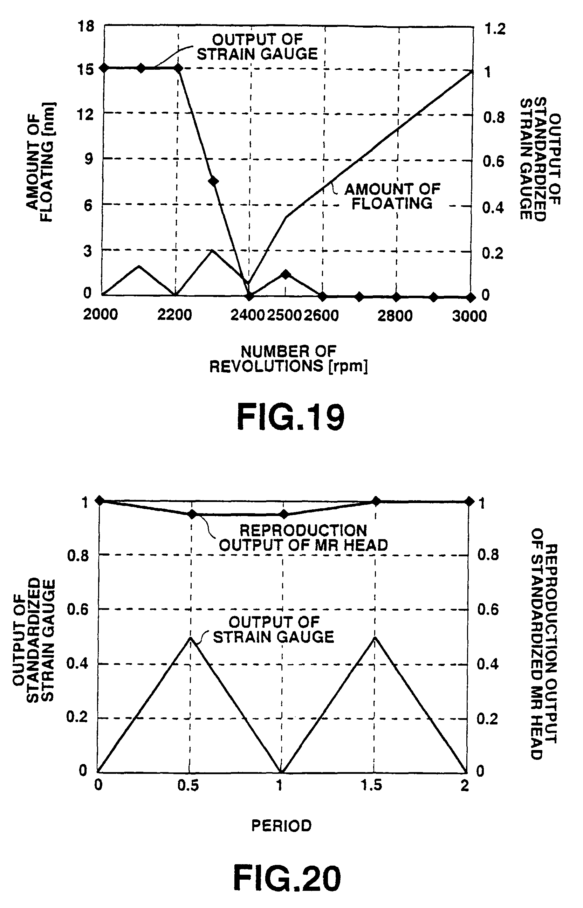

A measuring system similar to that according to the first example was employed except for the measurement head slider 29 and the measuring disc having the flat and smooth surface. Thus, a method similar to that according to the first example was employed to measure the number of revolutions of the measuring disc, the amount of floating of the measurement head slider 29 and the output of the strain gauge. Results were shown in FIG. 19.

As shown in FIG. 19, similar results of measurement to that realized in the first example in which the measurement disc 20 having the surface, on which projections and pits were formed, were, as shown in FIG. 19, obtained in this example in which the measurement head slider 29 having the surface on which the projections and pits were formed.

That is, as shown in FIG. 19, the amount of floating of the measurement head slider 29 was about 15 nm when the number of revolutions of the measuring disc was 3000 rpm. When the number of revolutions was gradually reduced, the amount of floating was linearly reduced. When the number of revolutions was about 2500 rpm, the amount of floating was about 5 nm. When the number of revolutions was 2500 rpm or smaller, disorder of the amount of floating started. The output of the strain gauge is zero when the number of revolutions of the measuring disc is 3000 rpm to about 2500 rpm. The output can be produced when the number of revolutions is 2500 rpm or smaller. When the number of revolutions is 2200 rpm, the output is saturated.

The measured amount of floating of the measurement head slider 29 is a standard amount of floating for the head slider for a hard disc drive. As can be understood from results shown in FIG. 19, contact of the measurement head slider 29 with the surface of the measuring disc start when the number of revolutions of the measurement head slider 29 is about 2500 rpm because the change in floating of the measurement head slider 29 and glide height of the measuring disc must be estimated.

That is, when the number of revolutions of the measuring disc is larger than 2500 rpm, the load of the measurement head slider 29 is borne by the floating force generated by the air flows introduced into gaps between the recesses of the measurement head slider 29 and the measuring disc. When the number of revolutions of the measuring disc is smaller than 2500 rpm, the floating force generated by the air flows introduced into the gaps between the recesses of the measurement head slider 29 and the measuring disc is insufficient to bear the load of the measurement head slider 29. As a result, the measurement head slider 29 is borne by the above-mentioned floating force and the measuring disc. When the number of revolutions of the measuring disc is 2200 rpm or smaller, the load of the measurement head slider 29 is substantially fully borne by the measuring disc.

As can be understood from the above-mentioned facts, when the number of revolutions of the measuring disc is about 2500 rpm, a state is realized in which the load of the measurement head slider 29 is borne by the floating force generated by the air flows introduced into the gaps between the measurement head slider 29 and the measuring disc in a state in which the measurement head slider 29 and the measuring disc are in contact with each other. That is, when the number of revolutions of the measuring disc is made to be about 2500 rpm, the magnetic head mounted on the measurement head slider 29 can be brought into contact with the measuring disc without load.

⟨Fourth Example⟩

In this example, a measurement head slider 29 similar to that employed in the third example was employed. As the measuring disc, a measuring disc was employed which had a structure that a magnetic film similar to that of the second example was formed on a glass disc having a flat and smooth surface. A measuring system and a method similar to those of the second example were employed to cause the measurement head slider 29 to perform scanning so that the output of the strain gauge and the reproduction output of the MR head were measured.

Results are shown in FIG. 20. FIG. 20 is a graph showing the relationship between the scanning period of the measurement head slider 29 and the output of the strain gauge and the relationship between the scanning period of the measurement head slider 29 and the reproduction output of the MR Head. As shown in FIG. 20, similar results of measurement to those obtained in the second example using the measurement disc 24 having the surface, on which projections and pits were formed, were obtained in this example in which the measurement head slider 29 having the surface on which the projections and pits were formed was employed.

That is, as shown in FIG. 20, the reproduction output of the MR head was substantially constant even if the measurement head slider 29 was performing the scanning operation.

As can be understood from a comparison with FIG. 19, the output of the strain gauge was about 1/5 of the output of the strain gauge produced when the load of the measurement head slider 29 is completely added to the surface of the measurement disc. However, the output was not zero. The reason for this will now be described. Since the measurement head slider 29 is formed into the taper flat shape having the two rails similarly to the second example, the amount of floating varies depending on the radial position of the disc. Therefore, the floating force generated by the air flows introduced between the measurement head slider 29 and the recesses of the measurement disc and the load of the measurement head slider 29 does not balance with each other in the direction toward the outer end of the disc. Thus, the measurement head slider 29 is undesirably brought into contact with the projections of the measurement disc with a load. Therefore, if, for example, a so-called TPC slider or the like, the amount of floating of which does not depend on the radial position of the disc, is employed, the above-mentioned problem can be prevented. Thus, the output of the strain gauge 27 can be made to always be zero.

As can be understood from the results in the third and fourth examples, use of the head slider having the predetermined projection and pit pattern on the surface opposite to the magnetic disc enables the recording/reproducing operation in a state in which the magnetic head is in contact with the surface of the disc without load. Thus, abrasion between the magnetic head and magnetic disc can be prevented and satisfactory recording/reproducing characteristic can be realized.

⟨Fifth Example⟩

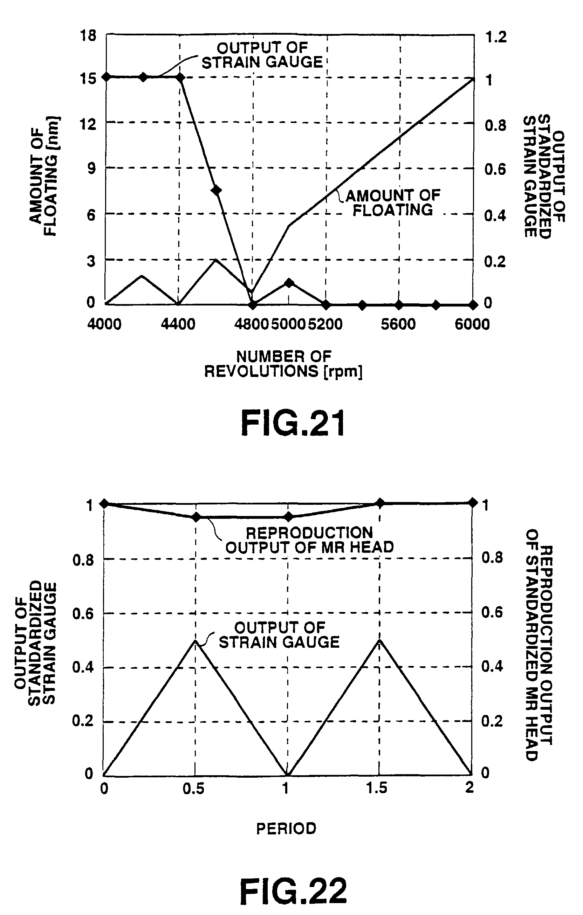

In this example, a measurement head slider 29 similar to that according to the third example was employed. As the measuring disc, a measurement disc 20 similarly to that according to the first example was employed which had the surface on which predetermined projection and pit pattern was formed. A measuring system and a method similar to those according to the first example were employed to measure the number of revolutions of the disc, the amount of floating of the measurement head slider 29 and the output of the strain gauge were measured. Results were shown in FIG. 21.

As shown in FIG. 21, this example in which the measurement head slider 29 having the surface on which the projections and pits were formed and the measurement disc 20 having the surface on which the projections and pits were formed were employed resulted similar results to those obtained in the first example in which the projections and pits are formed on only the surface of the measurement disc 20 and the third example in which the projections and pits are formed on only the surface of the measurement head slider 29.

That is, as shown in FIG. 21, the amount of floating of the measurement head slider 29 was about 15 nm when the number of revolutions of the measurement disc 20 was 6000 rpm. The amount of floating was linearly reduced as the number of revolutions was gradually reduced. When the number of revolutions was about 5000 rpm, the amount of floating was about 5 nm. When the number of revolutions was 5000 rpm or smaller, disorder of the amount of floating starts. The output of the strain gauge was zero when the number of revolutions of the measurement disc 20 was 6000 rpm to about 5000 rpm. When the number of revolutions is 5000 rpm or smaller, the output can be produced. When the number of revolutions was 4400 rpm, the output was saturated.

The measured amount of floating of the measurement head slider 29 is a standard amount of floating for the Head slider for the hard disc drive. As can be understood from results shown in FIG. 21, contact of the measurement head slider 29 with the surface of the measurement disc 20 starts when the number of revolutions of the measurement head slider 29 is about 5000 rpm because change in floating of the measurement head slider 29 and the glide height of the measurement disc 20 must be estimated.

That is, when the number of revolutions of the measuring disc is larger than 5000 rpm, the load of the measurement head slider 29 is borne by the floating force generated by the air flows introduced into the gap between the measurement head slider 29 and the measurement disc 20. If the number of revolutions of the measurement disc 20 is smaller than 5000 rpm, the load of the measurement head slider 29 cannot be borne by only the floating force generated by the air flows introduced into the gaps between the measurement head slider 29 and the measurement disc 20. Therefore, the measurement head slider 29 is borne by the above-mentioned floating force and the projections of the measurement disc 20. If the number of revolutions of the measurement disc 20 is 4400 rpm or smaller, the load of the measurement head slider 29 is substantially fully borne by the projections of the measurement disc 20.

As can be understood from the above-mentioned facts, when the number of revolutions of the measurement disc 20 is about 5000 rpm, a state is realized in which the load of the measurement head slider 29 is borne by the floating force generated by the air flows introduced into the gaps between the measurement head slider 29 and the measurement disc 20 in a state in which the measurement head slider 29 and the measurement disc 20 are in contact with each other. That is, when the number of revolutions of the measurement disc 20 is made to be about 5000 rpm, the magnetic head mounted on the measurement head slider 29 can be brought into contact with the measurement disc 20 without load.

⟨Sixth Example⟩

In this example, a measurement head slider 29 similar to that according to the third example was employed. As the measuring disc, a measurement disc 24 similar to that according to the second example and having the surface on which a projection and pit pattern was formed was employed. A similar measuring system to that according to the second example and a similar method to that according to the second example were employed to cause the measurement head slider 29 perform scanning. Thus, outputs from the strain gauge and the reproduction output of the MR head were measured.

Results were shown in FIG. 22. Similar to FIGS. 17 and 20, FIG. 22 is a graph showing the relationship between the scanning period of the measurement head slider 29 and the output of the strain gauge and the relationship between the scanning period of the measurement head slider 29 and the reproduction output of the MR head.

As shown in FIG. 22, this example in which the measurement head slider 29 having the surface, on which the projections and pits were formed and the measurement disc 24 having the surface on which the projections and pits were formed were employed was resulted similarly to the second example in which the projections and pits were formed on only the surface of the measurement disc 24 and the fourth example in which the projections and pits were formed on only the surface of the measurement head slider 29.

As can be understood from results of the fifth and sixth examples, even the hard disc drive incorporating the head slider having the surface which is opposite to the magnetic disc and on which the predetermined projection and pit pattern is formed and the magnetic disc having the surface on which a predetermined projection and pit pattern is formed is able to perform a recording/reproducing operation in a state in which the magnetic head is in contact with the surface of the disc without load. The foregoing effect is similar to that obtainable from the hard disc drive incorporating the head slider having the surface which is opposite to the magnetic disc and on which a predetermined projection and pit pattern is formed and the magnetic disc having the flat and smooth surface and a hard disc drive incorporating a head slider having the surface which is opposite to the magnetic disc and which is flat and smooth and a magnetic disc having the surface on which a predetermined projection and pit pattern is formed. As a result, abrasion of the magnetic head and the magnetic disc can be prevented. Thus, a satisfactory recording/reproducing characteristic can be realized.

⟨Another Example of Head Slider⟩

Each rail of the head slider according to the first to sixth examples has the surface which is opposite to the disc and which is formed into a shape parallel to the surface of the disc. It is preferable that each rail of the head slider has a surface which is opposite to the surface of the disc and which is formed into a projecting shape (a so-called crown shape). That is, it is preferable that the head slider having the pair of the rails which are substantially in parallel to the direction of rotation of the magnetic disc be structured in such a manner that the surface of each rail is curved into a so-called crown shape.

The head slider having the rails each of which is formed into the crown shape will now be described.

In the head slider having the rails formed into the crown shape, it is preferable that the crown amount C of the rail satisfy the following Equation (2-1) when the length of the rail is L and the difference in the amount of floating between the end on the rail through which air is introduced and the end from which air is discharged is Δd:

$$C \le L \{L - (L^2 - \Delta d^2)^{1/2}\}/(2\Delta d) \qquad (2\text{-}1)$$

The above-mentioned Equation (2-1) was found by the inventor of the present invention by paying attention to the crown amount C of the rail of the head slider of a hard disc drive as a result of energetic study. The process for obtaining the above-mentioned Equation (2-1) will now be described.

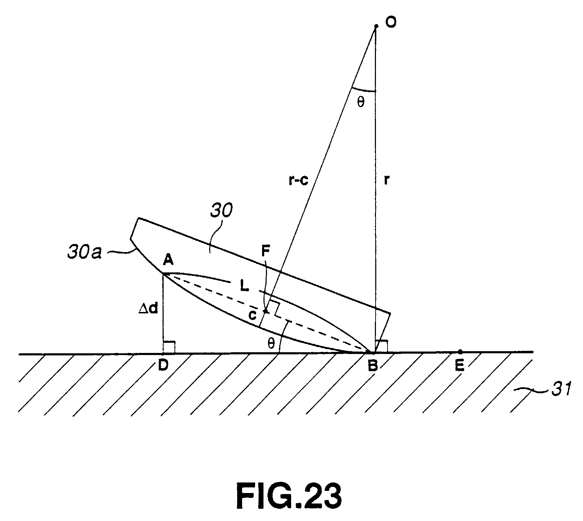

To describe the process for obtaining the Equation (2-1), FIG. 23 is employed which is a schematic view showing a head slider and a magnetic disc of a contact type hard disc drive. As shown in FIG. 23, assumption is made that the central portion of the curvature of the crown of the head slider 30 is point O, an end (hereinafter called an "air-introduction-end point") of the two ends of the rail of the head slider 30 into which air is introduced is point A and an intersection of an end (hereinafter called an "air-discharge-end point") from which air is discharged and the magnetic disc is B. Another assumption is made that the midpoint of a segment AB is point F and an intersection between a perpendicular drawn from the point A to the magnetic disc 31 and the surface of the magnetic disc 31 is point D. Another assumption is made that a point on the extension of a straight line BD along the surface of the magnetic disc 31 and positioned opposite to the point D with respect to the point B is point E. At this time, a straight line DE along the surface of the magnetic disc 31 is a tangent of an arc AB.

When a recording/reproducing operation is performed, the air-introduction-end point A of the two ends of the rail of the head slider 30 is floated. Moreover, the air-discharge-end point B which is opposite to the air-introduction-end point A and which is a lengthwise directional end of the rail is brought into contact with the magnetic disc 31. At this time, the magnetic head mounted on the air-discharge-end point B and the magnetic disc 31 are brought into contact with each other. Note that the thickness of the magnetic head is sufficiently small with respect to the head slider 30 and therefore the thickness can be ignored.

In the head slider 30 shown in FIG. 23, air which is introduced into a gap between the head slider 30 and the magnetic disc 31 is introduced into the leading end of the head slider 30, that is, the end of a tapered portion 30a formed at the leading end of the lengthwise direction. Then, air is allowed to pass through the air-introduction-end point A, and then discharged from the air-discharge-end point B. Since the crown amount C is paid attention in this example, the tapered portion 30a is ignored. Thus, an assumption is made that the end into which air is introduced is the end of the crown shape, that is, the air-introduction-end point A.

The crown amount C of the head slider 30 is defined to be the distance from the midpoint of a straight line, which connects the air-introduction-end point A and the air-discharge-end point B to each other, to a line (that is, the arc AB) indicating the shape of the rail. Moreover, an assumption is made that the distance from the air-introduction-end point A to the air-discharge-end point B is L and the difference between the amount of floating of the head slider 30 at the air-introduction-end point A and the amount of floating of the head slider 30 at the air-discharge-end point B is $\Delta d$.

The straight line DE is, as shown in FIG. 23, in contact with the arc AB. Therefore, the straight line OB, which is the radius of the arc AB, and the straight line DE intersect perpendicularly at the point B. That is, $\angle$ OBE is 90°. A $\Delta d$ lso each of $\angle$ ADE and $\angle$ BFO is 90°. Therefore, $\triangle$ADB and $\triangle$BFO are similar to each other. Moreover, $\angle$ ABD = $\angle$ BOF. Therefore, putting $\angle$ ABD = $\angle$ BOF = $\theta$, the following Equations (2-2) and (2-3) can be obtained.

$$\tan^{-1}((L/2)/(r - C)) = \theta \qquad (2\text{-}2)$$

$$\tan^{-1}(\Delta d/(L^2 - \Delta d^2)^{1/2}) = \theta \qquad (2\text{-}3)$$

Since $0 \leq \theta < 90$ at this time, the following Equation (2-4) can be obtained from the above-mentioned Equations (2-2) and (2-3):

$$(L/2)/(r - C) = \Delta d/(L^2 - \Delta d^2)^{1/2} \qquad (2\text{-}4)$$

$\angle$ BFO of $\triangle$FBO is 90°. Therefore, the following Equation (2-5) can be obtained:

$$r^2 = (r - C)^2 + (L/2)^2 \qquad (2\text{-}5)$$

In accordance with the above-mentioned Equation (2-5), the following Equation (2-6) can be obtained:

$$r = \{C^2 + (L/2)^2\}/(2C) \qquad (2\text{-}6)$$

When the above-mentioned Equation (2-6) is substituted for the above-mentioned Equation (2-4), the following Equation (2-7) can be obtained:

$$CL/\{(L/2)^2 - C^2\} = \Delta d/(L^2 - \Delta d^2)^{1/2} \qquad (2\text{-}7)$$

When the above-mentioned Equation (2-7) is solved to obtain C, the following Equation (2-8) can be obtained:

$$C = L\{L - (L^2 - \Delta d^2)^{1/2}\}/(2\Delta d) \qquad (2\text{-}8)$$

When the crown amount C satisfies the above-mentioned Equation (2-8), the air-discharge-end point B is in contact with the magnetic disc 31. If the crown amount C is larger than the above-mentioned value, the projecting portion of the head slider 30 over the air-discharge-end point B, that is, the crown shape portion is undesirably brought into contact with the magnetic disc 31.

Namely, when the difference $\Delta d$ between the amount of floating of the air-introduction-end point and that of the air-discharge-end point satisfies the above-mentioned Equation (2-8), the difference $\Delta d$ corresponds to the difference in the amount of floating when the air-discharge-end point B is in contact with the magnetic disc 31. Therefore, when the difference between the amount of floating at the air-introduction-end point and that at the air-discharge-end point is smaller than the value of $\Delta d$ which satisfies the above-mentioned Equation (2-8), the crown shape portion is brought into contact with the magnetic disc 31 prior to the magnetic head.

Therefore, it is preferable that the crown amount crown amount C of the head slider 30 satisfies the Equation (2-1):

$$C \leq L \{L - (L^2 - \Delta d^2)^{1/2}\}/(2\Delta d) \qquad (2\text{-}1)$$

The head slider 30 incorporating the rails each satisfying the above-mentioned Equation (2-1) is free from contact of the crown shape rail with the magnetic disc 31. That is, when the crown amount C satisfies the above-mentioned Equation (2-1), contact of the rail of the head slider 30 and the magnetic disc 31 with each other which takes place when a recording/reproducing operation is performed can be prevented. Therefore, a stable contact state between the magnetic head and the magnetic disc 31 can be maintained.

The detailed structure of the example of the head slider having the above-mentioned crown shape rails will now be described.

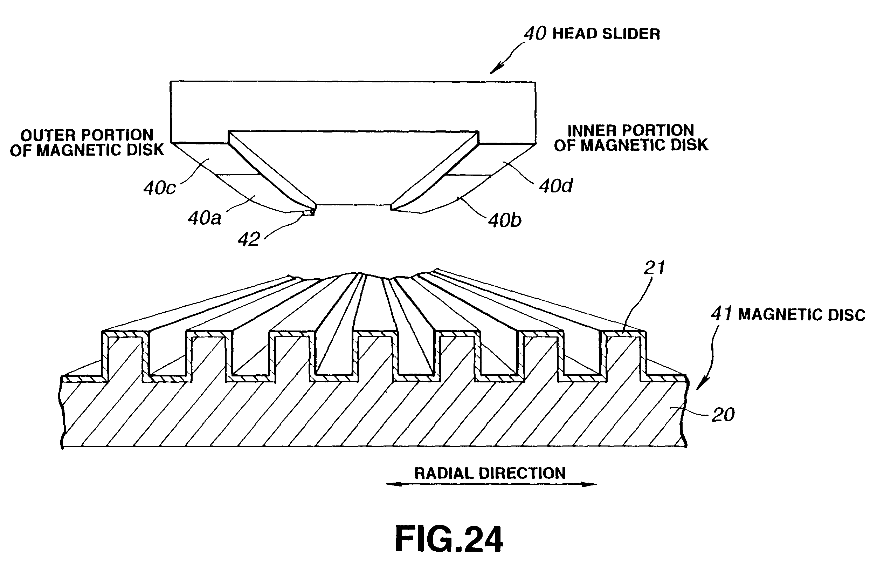

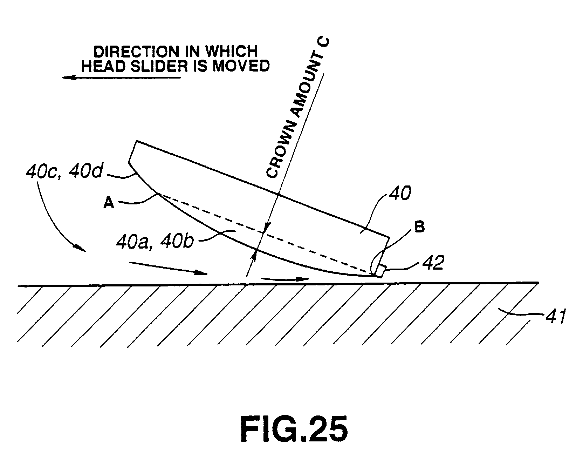

As shown in FIG. 24, a head slider 40 has a magnetic head 42 which is arranged to be brought into contact with a magnetic disc 41 when a recording/reproducing operation is performed and which is disposed at a rear end in the lengthwise direction thereof. The head slider 40 has, on the surface thereof opposite to the magnetic disc 41, a pair of rails 40a and 40b disposed substantially in parallel to the direction of rotation of the magnetic disc 41. The pair of the rails 40a and 40b has tapered portions 40c and 40d at the lengthwise directional ends opposite to the ends on which the magnetic head 42 is mounted. At this time, the rails 40a and 40b, as shown in FIG. 25, have portions projecting in a direction opposite to the magnetic disc 41, that is, crown shape portions.

In particular, the head slider 40 is structured similar to the head slider 30 shown in FIG. 23. That is, assuming that the length of the crown shape portion of each of the rails 40a and 40b is L, the difference between the amount of floating at the air-introduction-end point A and that at the air-discharge-end point B is $\Delta d$, and the crown amount of the head slider 40 is C, the crown amount C of the head slider 40 satisfies $C \leq L \{L - (L^2 - \Delta d^2)^{1/2}\}/(2\Delta d)$. It is preferable that the crown amount C is 50 nm or smaller, more preferably 30 nm or smaller. When a method (hereinafter called a "CSS method") is employed in which the head slider 40 is brought into contact with a predetermined region (hereinafter called a "CSS region") of the magnetic disc 41 when the magnetic disc 41 is not being rotated at a number of revolutions larger than a predetermined reference numeral, it is preferable that the crown amount C of the magnetic disc 41 is a positive value. As a result, the lifetime of the magnetic disc 41 on which the magnetic head 42 is mounted can be elongated.

The magnetic head 42 is mounted on the lengthwise directional end of the head slider 40 opposite to the tapered portions 40c and 40d. The magnetic head 42 is arranged to be brought into contact with the magnetic disc 41 when a recording/reproducing operation is performed.

In the head slider 40, when the magnetic disc 41 is rotated as shown in FIG. 25, air is introduced from the air-introduction-end point A into a position between the head slider 40 and the magnetic disc 41 along the rails 40a and 40b, as indicated with arrows shown in FIG. 25. Air introduced between the head slider 40 and the magnetic disc 41 as described above is allowed to flow from the position adjacent to the air-discharge-end point B to the rear portion of the head slider 40. That is, the rails 40a and 40b serve as air bearing surfaces of the head slider 40.

Thanks to the fir flow generated between the head slider 40 and the magnetic disc 41, at least a portion of the HEAD SLIDER 40 is floated when a recording/reproducing operation is performed. At this time, the magnetic head 42 mounted on the head slider 40 is brought into contact with the surface of the magnetic disc 41. Although FIG. 25 shows a state in which the overall body of the head slider 40 is floated to cause the flows of air to easily be understood, the air-discharge-end point B of the head slider 40 is brought into contact with the magnetic disc 41 when an actual recording/reproducing operation is performed. Thus, the recording/reproducing operation is performed in a state in which the magnetic head 42 mounted on the above-mentioned portion is in contact with the magnetic disc 41.

Since the crown amount C of the head slider 40 having the above-mentioned structure satisfies $C \leq L \{L - (L^2 - \Delta d^2)^{1/2}\}/(2\Delta d)$, undesirable contact of the crown shape portion with the magnetic disc 41 can be prevented when an recording/reproducing operation is performed. Thus, the magnetic head 42 and the magnetic disc 41 can stably be brought into contact with each other.

Also when the head slider 40 of the foregoing type is employed, the magnetic disc 41 must be a magnetic disc having the surface on which a projection and pit pattern is formed, as shown in FIGS. 6 and 7. As a result, air flow is permitted through small gaps between the recesses of the magnetic disc 41 and the rear ends of the rails 40a and 40b of the head slider 40, similarly to the above-mentioned head slider 6. When a recording/reproducing operation is performed, the amount of floating of the head slider 40 is reduced while the floating state of the head slider 40 on the magnetic disc 41 is maintained until the magnetic head 42 is brought into contact with the surface of the magnetic disc 41. As a result, similarly to the above-mentioned head slider 6, the magnetic head 42 and the projections of the magnetic disc 41 are brought into contact with one another in a state in which no load is applied to the magnetic head 42 and the magnetic disc 41.

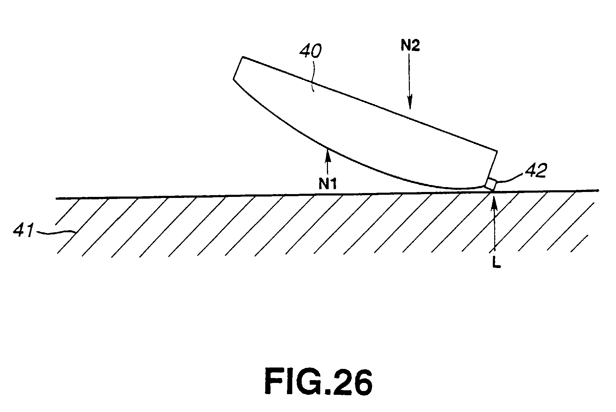

That is, air flows introduced from the tapered portions 40c and 40d along the rails 40a and 40b when the magnetic head 42 has been brought into contact with the projections of the magnetic disc 41 are discharged from the small gaps between the recesses of the magnetic disc 41 and the rear ends of the rails 40a and 40b. Thanks to the above-mentioned air flows, floating force N1 for the head slider 40 is generated in a direction in which the head slider 40 is floated, as shown in FIG. 26. When the floating force N1 and the load N2 of the head slider 40 are balanced with each other, the vertical drag L acting on the magnetic head 42 and generated from the projections of the magnetic disc 41 is made to be zero. Thus, the frictional force between the magnetic head 42 and the magnetic disc 41 can be made to be zero. As a result, abrasion between the magnetic head 42 and the magnetic disc 41 occurring when an recording/reproducing operation is performed can be prevented.

Since the head slider 40 has the structure that the crown amount C of each of the rails 40a and 40b satisfies $C \leq L\{L - (L^2 - \Delta d^2)^{1/2}\}/(2\Delta d)$, undesirable contact of the crown shape portion of the head slider 40 with the magnetic disc 41 can be prevented when a recording/reproducing operation is performed. Therefore, a stable contact state between the magnetic head 42 and the magnetic disc 41 can be maintained.

Therefore, the hard disc drive having the above-mentioned magnetic disc 41 is able to prevent abrasion occurring due to the contact between the magnetic head 42 and the magnetic disc 41 when a recording/reproducing operation is performed. Moreover, undesirable contact of the crown shape portion of the head slider 40 with the magnetic disc 41 can be prevented. Thus, a stable state of contact between the magnetic head 42 and the magnetic disc 41 can be maintained. As a result, the recording/reproducing characteristic can be improved.

Also the head slider 40 having the rails 40a and 40b each of which is formed into the crown shape may have a structure that the rails 40a and 40b have predetermined projection and pit patterns similar to the measurement head slider 29 shown in FIG. 18. In this case, the projections of the rails 40a and 40b are brought into contact with the magnetic disc 41. Thus, air is allowed to pass through the recesses of the rails 40a and 40b.

Results of experiments of a prototype head slider having the structure that each of the rails 40a and 40b is formed into the crown shape will now be described.

⟨Seventh Example⟩

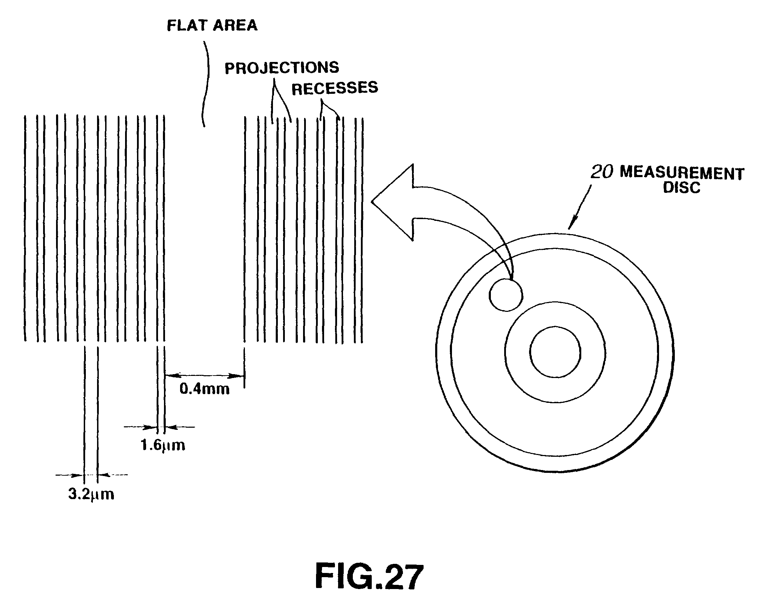

In this example, a measurement disc 20 similar to that according to the first example was employed. That is, the measurement disc 20 according to this example is a glass disc having a pattern formed as shown in FIG. 27. The measurement disc 20, as shown in FIG. 27, recesses each having a width of 1.6 μm and projections each having a width of 3.2 μm formed concentrically. The projection and pit pattern is formed in an area from a radius of 15.5 mm to 30.5 mm of the measurement disc 20. Moreover, a flat area having a width of 0.4 mm for measuring the amount of floating of the measuring head slider is formed adjacent to the central portion of the above-mentioned pattern.

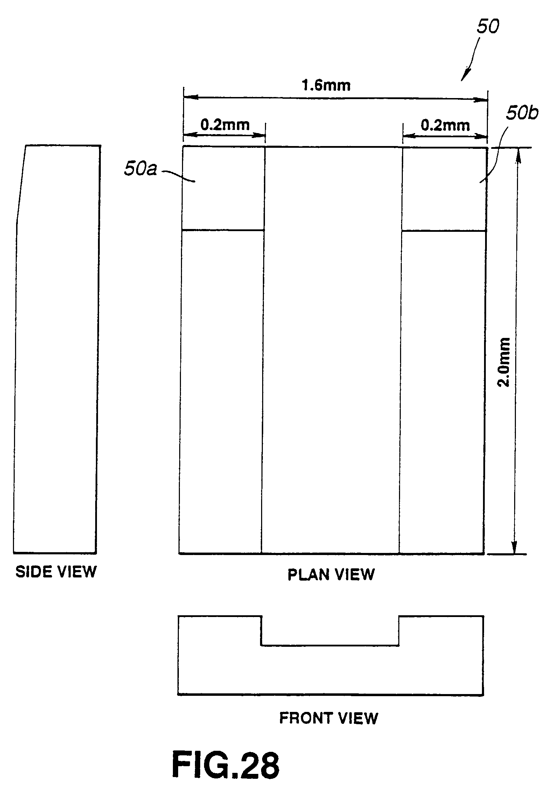

The measuring head slider was nano slider having two rails as shown in FIG. 28. The measurement head slider 50 has a length of the slider of 2.0 mm, a width of the slider of 1.6 mm and a width of the rail of 200 μm. The load is 3.5 gf. A measuring rail having a width of 50 μm was disposed at an intermediate position between the rail 50a and the rail 50b, that is, on the center line of the measurement head slider 50. Since the measuring rail has a sufficiently small width as compared with the two side rails 50a and 50b, no influence is exerted on floating of the measurement head slider 50. In this example, a plurality of measurement head sliders 50 were prepared which included rails 50a and 50b having crown amounts C varied from - 20 nm to 100 nm.

A measuring system similar to that according to the first example except for the measurement head slider 50 having the crown shape rails 50a and 50b was employed to measure the number of revolutions of the measurement disc 20, the amount of floating of the measurement head slider 50 and the output of the strain gauge.

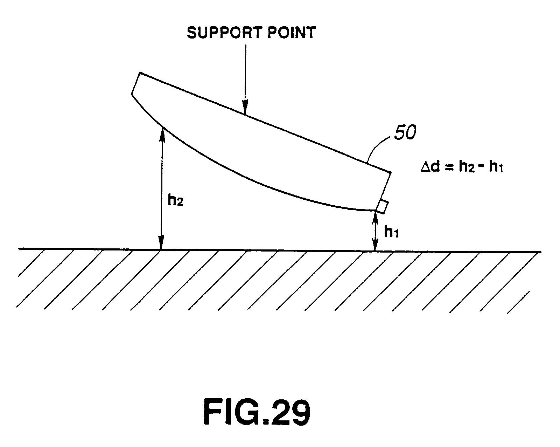

Specifically, the amount of floating of the measurement head slider 50 was initially measured in this example. The plural measurement head sliders 50 having different crown amounts C were arranged in such a manner that the support point by dint of a suspension for supporting the measurement head slider 50 was shifted as shown in FIG. 29. Thus, the difference $\Delta d$ between the amount of floating at the air-introduction-end point and that at the air-discharge-end point, that is, $(h_2 - h_1)$ shown in FIG. 29 was set to be 0.1 μm, 0.15 μm and 0.2 μm.

Then, the measurement head slider 50 having any one of the three types of the differences in the amount of floating $\Delta d$ between the air-introduction-end point and the air-discharge-end point was floated by rotating the measurement disc 20.

Then, the number of revolutions of the measurement disc 20 was gradually reduce so that the amount of floating until the measurement head slider 50 was brought into contact with the measurement disc 20 was measured. Simultaneously, the output of the strain gauge was measured. The amount of floating was measured by the laser vibrometer similarly to the first example. The rotation of the measurement disc 20 was performed in a servo manner so that the number of revolutions of the measurement disc 20 was accurately reduced as time elapses. In accordance with time taken from start of the measurement, the number of revolutions of the measurement disc 20 is detected. Then, the amount of floating of the measurement head slider 50 and the value of the strain gauge were measured at the predetermined number of revolutions.

When the strain gauge starts outputting, the reduction in the number of revolutions of the measurement disc 20 was interrupted. At this number of revolutions, the amount of floating at the air-introduction-end point and that at the air-discharge-end point of the measurement head slider 50 were measured.

All of the prepared measurement head sliders 50 were repeatedly measured as described above. Thus, the amount of floating at the air-introduction-end point and that at the air-discharge-end point of each measurement head slider 50 realized when contact with the measurement disc 20 was performed were measured. A consideration was made that the measurement disc 20 had a glide height and the measured amount of floating was a mean value of one rotation of the disc. Thus, if the measured amount of floating $h_1$ at the air-discharge-end point was 5 nm or smaller, a determination was made that the air-discharge-end point was in contact with the measurement disc 20.

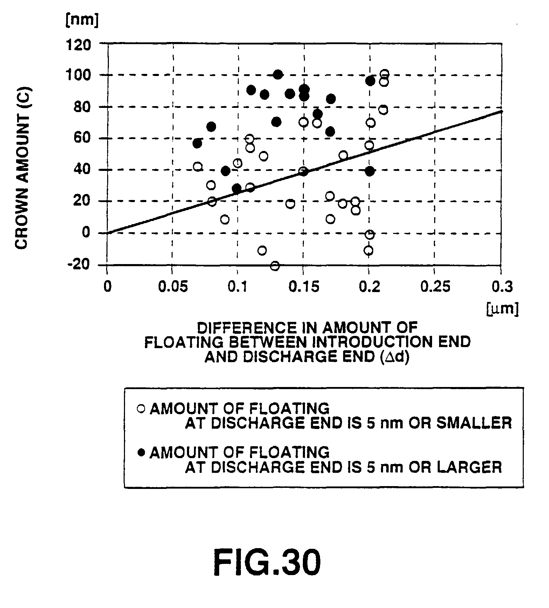

Results of measurement was shown in FIG. 30. In FIG. 30, the axis of ordinate stands for the crown amount C of each of the rails 50a and 50b of the measurement head slider 50 and axis of abscissa stands for the difference $\Delta d$ between the amount of floating at the air-introduction-end point and that at the air-discharge-end point of the measurement head slider 50, that is, $(h_2 - h_1)$. The difference $\Delta d$ shown in FIG. 20 varies in spite of setting the difference $\Delta d$ to be 0.1 $\mu$m, 0.15 $\mu$m and 0.2 $\mu$m. The reason for this can be considered that an error made when the support point is shifted is the cause of the above-mentioned variation.

White circles shown in FIG. 30 indicate a state in which the amount of floating $h_1$ at the air-discharge-end point of the measurement head slider 50 is 5 nm or smaller. In this case, contact of the air-discharge-end point with the measurement disc 20 is indicated.

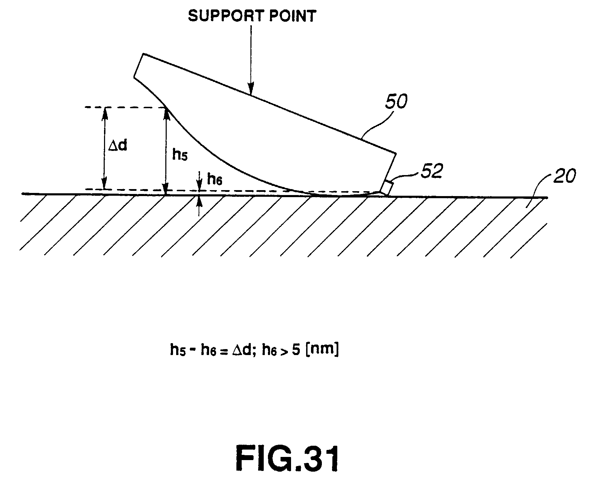

Black circles shown in FIG. 30 indicate a state in which the amount of floating $h_1$ at the air-discharge-end point of the measurement head slider 50 is 5 nm or greater. The foregoing state is realized when the rail come closer to the magnetic disc 51 as compared with the magnetic head 52 because the crown amount C is, as shown in FIG. 31, larger than an appropriate value. In this case, the air-discharge-end point of the measurement head slider 50 is positioned apart from the magnetic disc 51 and thus the magnetic head 52 and the measurement disc 20 are not in contact with each other, as indicated by $h_6$ shown in FIG. 31. Namely, as can also be understood from FIG. 31, in a state where the crown amount C does not satisfy the appropriate value range, the magnetic head 52 mounted on the measurement head slider 50 and the measurement disc 20 do not come in contact with each other even if the measurement head slider 50 and the measurement disc 20 are brought into contact with each other.

That is, the boundary between white circles indicating the optimum contact between the magnetic head 52 mounted on the measurement head slider 50 and the measurement disc 20 and the black circles indicating no contact between the magnetic head 52 mounted on the measurement head slider 50 and the measurement disc 20 indicates the optimum crown amount C.

The boundary between the white circles and the black circles shown in FIG. 30 and the straight line expressed by the Equation $C \leq L \{L - (L^2 - \Delta d^2)^{1/2}\}/(2\Delta d)$ obtained geometrically were subjected to a comparison. As a result, they substantially coincided with each other. Therefore, the above-mentioned Equation (2-1) was confirmed also from the measured values.

As can be understood from the above-mentioned results, if the crown amount C satisfies $C \leq L \{L - (L^2 - \Delta d^2)^{1/2}\}/(2\Delta d)$, an optimum state of contact between the magnetic head and the magnetic disc can be maintained.

When a magnetic disc having the surface on which the projection and pit pattern is formed is used in a recording/reproducing operation, it is preferable that the difference between the amount of floating at the air-introduction-end point and that at the air-discharge-end point of the head slider is about 0.1 $\mu$m. Therefore, it is preferable that the crown amount C of the head slider is 50 nm or smaller as can be understood from the results shown in FIG. 30, more preferably 30 nm or smaller.

When the contact start and stop (CSS) method is employed in which the head slider and the magnetic disc are brought into contact with each other when the hard disc drive is started or stopped, it is preferable that the crown amount C is a positive value in a viewpoint from the CSS characteristic. Therefore, when the CSS method is employed, it is preferable that the crown amount C of the rail of the head slider is not smaller than 0 nm nor greater than 50 nm, more preferably not smaller than 0 nm nor greater than 30 nm.

As described above, when each rail of the head slider is formed into the crown shape, the structure is formed in such a manner that the crown amount C satisfies $C \leq L \{L - (L^2 - \Delta d^2)^{1/2}\}/(2\Delta d)$. Thus, undesirable contact of the rail with the magnetic disc prior to the magnetic head can be prevented when a recording/reproducing operation is performed. As a result, a stable state of contact between the magnetic head and the magnetic disc can be maintained.

〈Another Example of Head Slider〉

If external force of some kind acts on the head slider and thus the head slider is inclined, the right and left ends of the head slider serve as the support points for the magnetic disc. Therefore, either of the right and left rails is separated from the surface of the magnetic disc. If the magnetic head is mounted on the separated rail, the distance from the magnetic head to the magnetic disc is enlarged excessively. As a result, the recording/reproducing characteristic deteriorates.

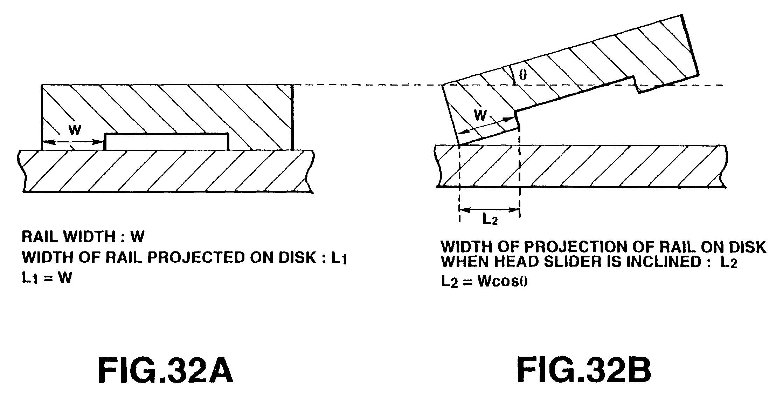

The above-mentioned state is shown in FIG. 32. That is, the head slider of a contact type arranged to perform a recording/reproducing operation in a state in which the magnetic head and the magnetic disc are in contact with each other is brought to a state in which the head slider and the magnetic disc are positioned in parallel to each other as shown in FIG. 32 (A) when the magnetic head and the magnetic disc are in contact with each other. If external force acts on the Head slider and the head slider is inclined, a state as shown in FIG. 32 (B) is realized. At this time, restoring force for restoring the attitude of the head slider into the state as shown in FIG. 32 (A) acts. The restoring force is, in addition to the leaf spring for supporting the head slider, the pressure of air flows which flow between the rails of the head slider and the surface of the magnetic disc.

That is, if the head slider is inclined as shown in FIG. 32 (B), the gap between one of the rails and the magnetic disc is made to be smaller than the gap between the other rail and the magnetic disc. As a result, the pressure of the air flow which flows between the one of the rails and the magnetic disc is made to be higher than the pressure of the air flow which flows between the other rail and the magnetic disc. As a result, the restoring force for restoring the attitude of the head slider is generated.

When the attitude of the head slider is in a normal state as shown in FIG. 32 (A), the width W of each of the rails of the head slider is, as expressed by the following Equation (3-1), the same as an effective width $L_1$ of the rail for generating the pressure by dint of the air flow. As a matter of course, the above-mentioned restoring force is not generated in the foregoing state:

$$L_1 = W \qquad (3\text{-}1)$$

If the head slider is inclined by an angular degree of q as shown in FIG. 32 (B), the restoring force acts. However, the effective rail width $L_1$ is somewhat reduced as shown in the following Equation (3-2) as compared with the actual rail width W. Note that the effective rail width $L_1$ corresponds to the width of the projected rail width Which on the magnetic disc.

$$L_1 = W\cos\theta \ (< L_1) \qquad (3\text{-}2)$$

If the effective rail width $L_1$ is reduced, the restoring force generated by dint of the air flow which flows between the rails and the surface of the disc is undesirably reduced.

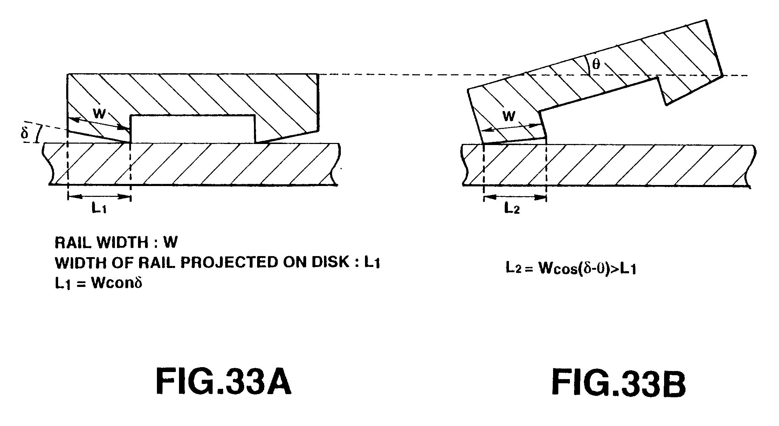

Therefore, it is preferable that the head slider has a structure that the surfaces of the rails (that is, rail surfaces) opposite to the magnetic disc are inclined with respect to the surface of the disc, as shown in FIG. 33.

The head slider arranged in such a manner that the rail surfaces are inclined with respect to the surface of the disc as shown in FIG. 33 is brought to a state as shown in FIG. 33 (A) when the magnetic head is in contact with the magnetic disc. When external force acts on the head slider and thus the head slider is inclined, the above-mentioned head slider is brought to a state as shown in FIG. 33 (B).

The above-mentioned head slider enables a gap to be formed between the rail surfaces and the magnetic disc in a state as shown in FIG. 33 (A). Since the rail surfaces are inclined, the gap between the rail surfaces and the magnetic disc is enlarged in a direction toward the outer end of the head slider. When the head slider is inclined, air flows introduced into the gap acts as restoring force for restoring the attitude of the head slider from the state shown in FIG. 33 (B) to the state shown in FIG. 33 (A) in addition to the force of the leaf spring acting on the support point.

When the attitude of the head slider is in a normal state as shown in FIG. 33 (A), the head slider is structured in such a manner that the rail width W of the head slider and effective rail width $L_1$ for generating the pressure by the air flows have a relationship expressed by the following Equation (3-3). The rail width W is not the width in a direction in parallel to the surface of the disc. The rail width W is a width in a direction in parallel to the surface of the rail. Symbol δ indicate an angle of inclination of the rail surface with respect to the surface of the disc.

$$L_1 = W\cos\delta \qquad (3\text{-}3)$$

When the head slider is inclined as shown in FIG. 33 (B), the effective rail width $L_2$ (that is, the width obtained by projecting the rail width W to the magnetic disc) is made to be as expressed by the following Equation (3-4), the width $L_2$ being larger than the rail width $L_1$:

$$L_2 = W\cos(\delta - \theta) \ (> L_1) \qquad (3\text{-}4)$$

Therefore, in the head slider structured as shown in FIG. 33 in such a manner that the rail surfaces are inclined with respect to the surface of the disc, the restoring force for restoring the attitude of the head slider acts considerably as compared with the head slider structured as shown in FIG. 32. That is, even if the head slider is inclined because of applied external force, the pressure generated by the air flows which flow between the head slider and the magnetic disc immediately restores the attitude of the head slider to the original state.

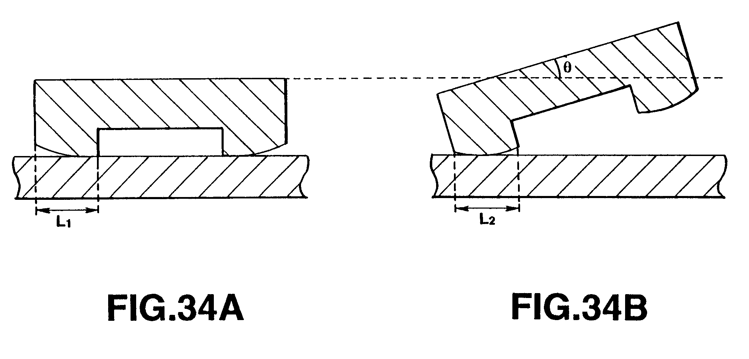

The head slider of a hard disc drive must have a shape which does not damage the magnetic disc. Therefore, it is preferable that the rail surface of the head slider is a curved surface with respect to the magnetic disc, as shown in FIG. 34. Specifically, it is preferable that the shape of the rail surface of the head slider is formed into a circular arc shape to realize easy machining characteristic. When the shape of the rail surface is formed into the curved shape, such as the circular arc, any contact of a sharp portion of the head slider with the magnetic disc can be prevented. Thus, the head slider does not damage the magnetic disc.

FIG. 34 (A) shows a state in which the attitude of the head slider is in a normal state, similarly to FIG. 33 (A). FIG. 34 (B) shows a state in which the head slider is inclined, similarly to FIG. 33 (B). Also the head slider shown in FIG. 34 has the structure that the effective rail width $L_2$ realized when the head slider is inclined is larger than the effective rail width $L_1$ in a normal state, similarly to the head slider shown in FIG. 33. Therefore, even if the head slider is inclined, the attitude of the head slider can immediately be restored by dint of the pressure generated by the air flows which flow between the head slider and the magnetic disc.

The example of the above-mentioned head slider will now be described.

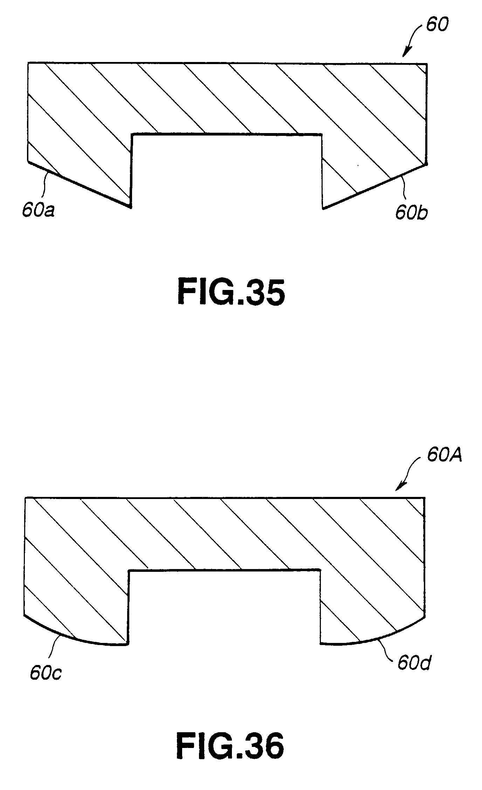

The cross sectional shape of an example of the head slider is shown in FIG. 35. A magnetic head is mounted on the head slider 60. Moreover, the head slider 60 has a pair of rails disposed in parallel to a direction of rotation of the magnetic disc. Rail surfaces 60a and 60b of the rails which are surfaces opposite to the magnetic disc are inclined with respect to the surface of the disc.

The head slider 60 is structured in such a manner that at least a portion of the rail surfaces 60a and 60b does not come in contact with the magnetic disc and forms a gap from the magnetic disc when a recording/reproducing operation is performed. As a result of air flows which flow in the gap, at least a portion is floated. The magnetic disc mounted on the head slider 60 is brought into contact with the surface of the magnetic disc.

When a recording/reproducing operation is performed with the head slider 60, air flows between the head slider 60 and the magnetic disc. The air flow generates force for floating the head slider 60. The floating force and the load of the head slider 60 are balanced with each other. As a result, abrasion of the magnetic head and the magnetic disc can be prevented while a recording/reproducing operation is performed in a state in which the magnetic head and the magnetic disc are in contact with each other. Since the rail surfaces 60a and 60b of the head slider 60 are inclined with respect to the surface of the disc, the original state can quickly be restored even if the head slider 60 is inclined by dint of external force.

The shape of the head slider according to this example is not limited to that of the head slider 60 shown in FIG. 35. A head slider 60A structure, for example, as shown in FIG. 36 may be employed. The head slider 60A has rail surfaces 60c and 60d which are formed into curved shapes in the form of circular arcs.

Since the head slider 60A has no sharp portions which can be brought into contact with the magnetic disc, damage of the magnetic disc can be prevented.

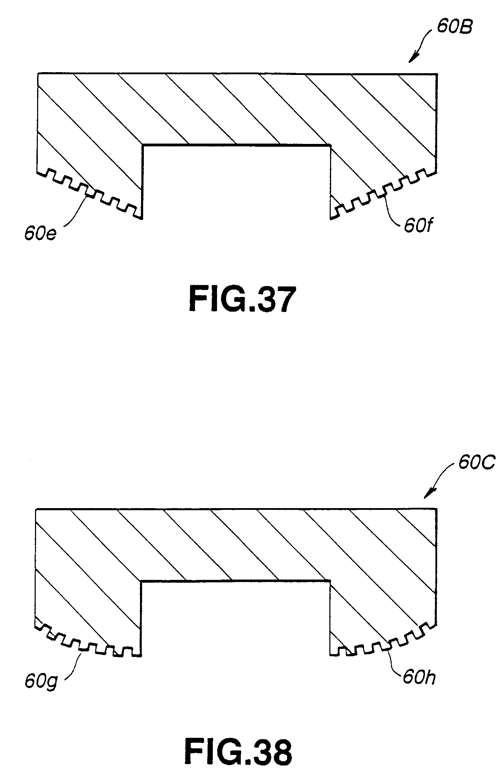

The head slider 60 having the rail surfaces 60a and 60b inclined with respect to the magnetic disc (hereinafter called an "inclined-type head slider") as shown in FIG. 35 may be structured in such a manner that the surfaces of the rail surfaces 60a and 60b have predetermined projections and pits. An example of the inclined-type head slider is shown in FIG. 37. An inclined-type head slider 60B have rail surfaces 60e and 60f inclined with respect to the surface of the disc. Moreover, a predetermined projection and pit pattern is formed on the rail surfaces 60e and 60f. The predetermined projection and pit pattern is formed into a plurality of grooves which are in parallel to the direction of rotation of the magnetic disc.

Also the head slider 60A (hereinafter called a "curved-surface head slider") having the rail surfaces 60c and 60d curved into the circular arc shapes as shown in FIG. 36 may have the structure that a predetermined projection and pit pattern is formed on the surface of each of the rail surfaces 60c and 60d. An example of the curved-surface head slider is shown in FIG. 38. A curved-surface head slider 60C shown in FIG. 38 has rail surfaces 60g and 60h formed into curved surfaces. Moreover, a predetermined projection and pit pattern is formed on each of the rail surfaces 60g and 60h. Similarly to the inclined-type head slider 60B shown in FIG. 37, the predetermined projection and pit pattern is formed into a plurality of grooves which are in parallel to the direction of rotation of the magnetic disc.

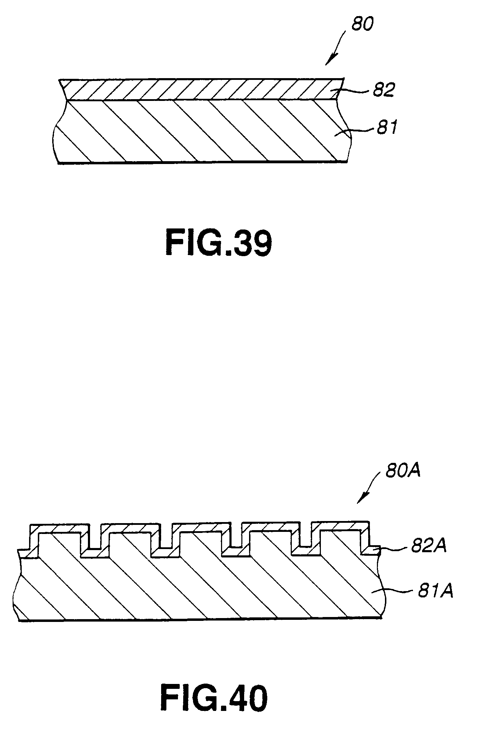

As shown in FIG. 39, the magnetic disc 80 having the above-mentioned head slider and arranged to perform a recording/reproducing operation has a magnetic film 82 and the like on a substrate 81. Note that the magnetic disc may be similar to the magnetic disc 3 described with reference to FIGS. 6 and 7. That is, a magnetic disc 80A may be employed which incorporates a substrate 81A having the surface on which the projections and pits are formed and a magnetic film 82A and the like is formed.

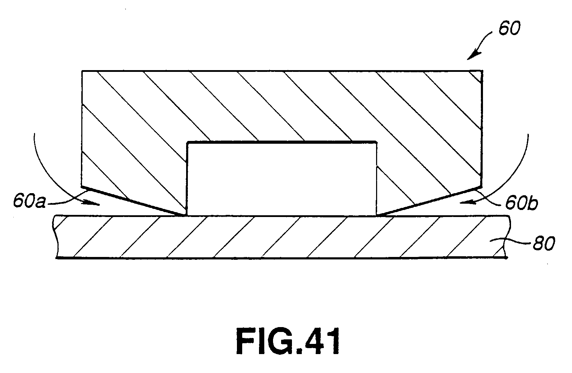

When the head slider 60 is operated to perform a recording/reproducing operation with respect to the magnetic disc 80 which is rotated, air is introduced into the gaps between the rail surfaces 60a and 60b of the head slider 60 and the magnetic disc as indicated with an arrow shown in FIG. 41 when the magnetic disc 80 is rotated. The air flows generate floating force for floating the head slider 60 in a direction in which the head slider 60 is floated. When the floating force and the load of the head slider 60 are balanced with each other, the magnetic head mounted on the head slider 60 and the magnetic disc 80 are brought into contact with each other without load. In this state, the vertical drag from the magnetic disc 80 against the magnetic head is made to be zero and thus the frictional resistance between the magnetic head and the magnetic disc 80 becomes extinct. Therefore, abrasion cannot easily be generated in the magnetic head and the magnetic disc 80. Although the head slider 60 has been described for example, also floating force is generated in each of the head sliders 60A, 60B and 60C.

The floating force generated by the air flows attains the same effect as that of the floating force generated by the air flows which flow between the gaps between the magnetic disc having the surface on which a projection and pit pattern is formed and the head slider and the floating force generated by the air flows which flow in the gaps between the head slider having the rail surfaces on which a projection and pit pattern is formed and the magnetic disc.

In the head slider 60 which is the inclined-type head slider, great restoring force for restoring the attitude to a normal state as shown in FIG. 33 (A) is generated when the attitude has been inclined as shown in FIG. 33 (B). The restoring force is composed of the force generated by the air flows which flow between the head slider 60 and the magnetic disc 80 as well as the force of the leaf spring for supporting the head slider 60.

That is, when the head slider 60 is inclined, the gap between one of the rails and the surface of the disc is made to be larger than the gap between the other rail and the surface of the disc. As a result, the pressure of the air flows which flow between one of the rails and the surface of the disc is made to be higher than the pressure of the air flows which flow between the other rail and the surface of the disc. As a result, the restoring force is generated which restores the attitude of the head slider 60.

Since the effective rail width $L_2$ realized when the head slider 60 has been inclined is enlarged, the pressure of the air flows which are generated when the head slider 60 has been inclined is made to be higher than that in the head slider having the structure as shown in FIG. 32. Therefore, even if the attitude of the head slider 60 is inclined by dint of external force of some kind, the original attitude can quickly be restored.

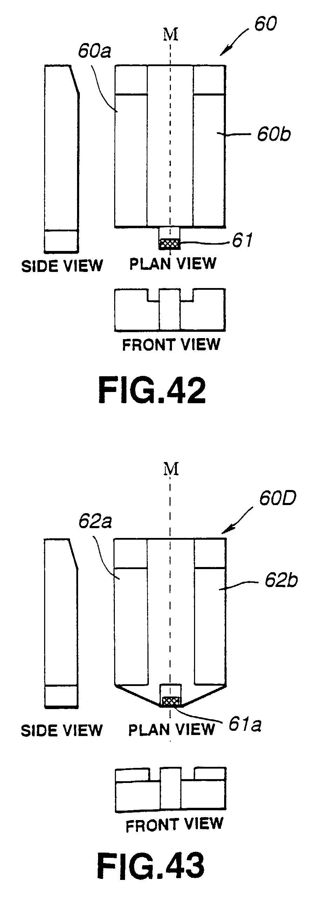

As shown in FIG. 42, it is preferable that a magnetic head 61 which is mounted on the head slider 60 is disposed at a position interposed between the pair of the rail surfaces 60a and 60b and on a center line M between the pair of the rail surfaces 60a and 60b. The head slider 60 is formed into a symmetrical shape with respect to the center line M. The magnetic head 61 is disposed on the outside of a region held between the pair of the rail surfaces 60a and 60b. As described above, even if the head slider 60 is inclined into either of the directions, the head slider 60 having the magnetic head 61 mounted thereon is able to prevent excessive separation of the magnetic head 61 from the magnetic disc.

The head slider 60 has a structure that the rails do not exist in the portions on the two sides of the portion on which the magnetic head 61 is mounted. Thus, even if the head slider 60 is inclined by dint of external force of some kind, the members on the two sides of the magnetic head 61 are brought into contact with the magnetic disc. As a result, separation of the portion on which the magnetic head 61 is mounted from the magnetic disc can be prevented.

The shape of the portion, on which the magnetic head is mounted, may have a shape as shown in FIG. 43. A head slider 60D shown in FIG. 43 has a pentagonal planar shape. Moreover, a portion for supporting a magnetic head 61a is formed at the rear end of the head slider. Also the head slider 60D has a symmetrical shape with respect to the center line M between the pair of the rail surfaces 62a and 62b. Moreover, the magnetic head 61a is disposed on the outside of the region interposed between the pair of the rail surfaces 62a and 62b. The head slider 60D has an advantage in terms of mass production because of easy machining.

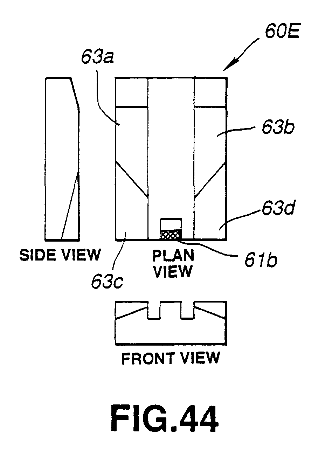

The shape of the portion, on which the magnetic head is mounted, may be formed as shown in FIG. 44. A head slider 60E shown in FIG. 44 has a structure that a magnetic head 61b is disposed at a position interposed between the pair of the rail surfaces 63a and 63b. Moreover, portions of the pair of the rail surfaces 63a and 63b corresponding to the two sides of the magnetic head 61b are cut so as to be formed into cut portions 63c and 63d. Since the head slider 60E has the structure that the portions corresponding to the two sides of the magnetic head 61b are cut so as to be formed into cut portions 63c and 63d, the members disposed on the two sides of the magnetic head 61b are brought into direct contact with the magnetic disc even if the head slider 60E is somewhat inclined. Therefore, the state of contact between the magnetic head 61b and the magnetic disc can furthermore be stabilized.

The head slider 60 is arranged in such a manner that the effective rail width $L_2$ is enlarged when the attitude of the head slider 60 is inclined laterally so that the restoring force is enlarged. Therefore, the shape of each of the rail surfaces 60a and 60b must be determined in previous consideration of the inclination angle $\delta$ of each of the rail surfaces 60a and 60b to cause the effective rail width $L_2$ to be enlarged when the attitude is inclined as shown in FIG. 33 (B).

The effective rail width $L_2$ is the cosine of the rail width W. Therefore, the position at which the inclination of the cosine function is made to be maximum is the angle at which the effective rail width $L_2$ is enlarged maximally when the head slider 60 is inclined by $\Delta\theta$.

Therefore, it is theoretically preferable that the inclination angle $\delta$ of the rail surfaces 60a and 60b makes an angle of 90° from the surface of the disc, that is, perpendicular. When the head slider 60 has been inclined, the effective rail width $L_2$ is enlarged maximally. When the inclination angle $\delta$ of the rail surfaces 60a and 60b is 90°, no floating force is, in a normal state, generated by the air flows which flow between the head slider 60 and the magnetic disc 80. Therefore, the floating force in a normal state is considered. It is preferable that the incli-

nation angle $\delta$ of the rail surfaces 60a and 60b is 45° or smaller. Moreover, it is preferable that the inclination angle $\delta$ of the rail surfaces 60a and 60b is about 0.1° to about 10° to facilitate the machining process.

Results of experiments of prototype inclined-type head slider and the curved-surface head slider will now be described.

〈Eighth Example〉

The relationship between the number of revolutions of the disc and the amount of floating of the head slider and the relationship between the number of revolutions of the disc and the frictional force acting on the head slider when the head slider is secured to a predetermined radial position of the disc were examined by the following method.

A measuring disc was a glass disc having a flat and smooth surface.

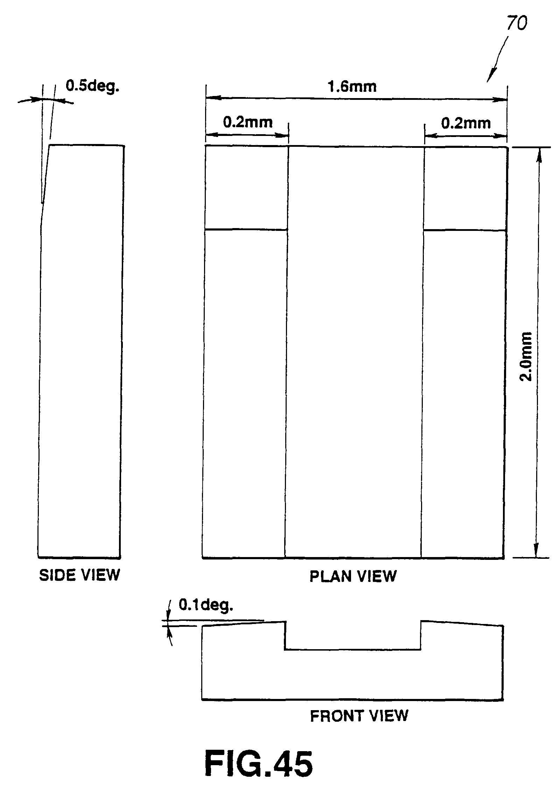

The measuring head slider was an inclined-type head slider formed as shown in FIG. 45. The measurement head slider 70 is a taper flat nano slider having two rails. The length of the slider is 2.0 mm, the width of the slider is 1.6 mm and the width of the rail is 200 $\mu$m. The load was 3.5 gf. A measuring rail having a width of 50 $\mu$m was disposed at an intermediate position between the rails, that is, on the center line of the measurement head slider 70. Since the measuring rail has a sufficiently small width as compared with that of each of the two side rails, the measuring rail does not considerably affect floating of the measurement head slider 70.

The front end portions of the two rails of the measurement head slider 70 are tapered. The tapered portions are structured in such a manner that the inclination angle is 0.5° when viewed from the side surface of the measuring head slider.

The two rails of the measurement head slider 70 are formed in such a manner that the inner portion of each rail is disposed adjacent to the disc and the outer portion is disposed apart from the disc by forming the structure in such a manner that the surface opposite to the disc is inclined with respect to the surface of the disc. The inclination angle $\delta$ of the rail surface with respect to the surface of the disc is 0.1°.

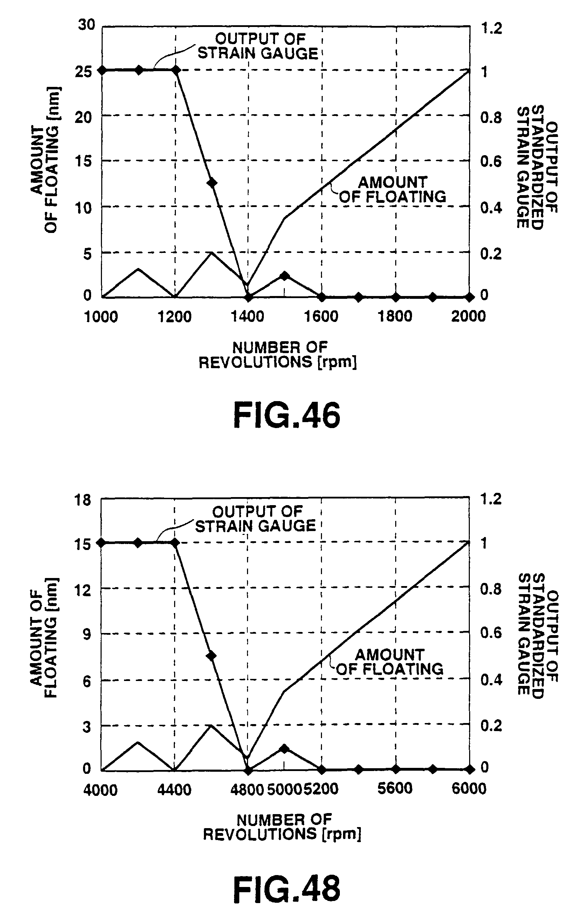

A measuring system similar to that according to the first example except for the above-mentioned measurement head slider 70 and the measuring disc having the flat and smooth surface and a method similar to that according to the first example were employed to measure the number of revolutions of the measuring disc, the amount of floating of the measurement head slider 70 and the output of the strain gauge. Results were shown in FIG. 46.

As shown in FIG. 46, the amount of floating of the measurement head slider 70 was about 25 nm when the number of revolutions of the measuring disc was 2000 rpm. When the number of revolutions was gradually reduced, the amount of floating was linearly reduced.

When the number of revolutions was about 1500 rpm, the amount of floating was about 8 nm. When the number of revolutions was 1500 rpm or smaller, disorder of the amount of floating starts.

The output of the strain gauge was zero when the number of revolutions of the measuring disc was 2000 rpm to about 1500 rpm. When the number of revolutions was 1500 rpm or smaller, output was started. When the number of revolutions was 1200 rpm, the output was saturated.

The measured amount of floating of the measurement head slider 70 is a standard amount of floating for a head slider for a hard disc drive. As can be understood from the results shown in FIG. 46, contact of the measurement head slider 70 with the surface of the measuring disc starts when the number of revolutions of the measuring disc is about 1500 rpm in consideration of change in floating of the measurement head slider 70 and the glide height of the measuring disc.

When the number of revolutions of the measuring disc is larger than 1500 rpm, the load of the measurement head slider 70 is borne by the floating force generated by the air flows introduced into the gaps between the two sides of the measurement head slider 70 and the measuring disc. When the number of revolutions of the measuring disc is smaller than 1500 rpm, the load of the measurement head slider 70 cannot be supported by only the floating force generated by the air flows introduced into the gaps between the two sides of the measurement head slider 70 and the measuring disc. Thus, the measurement head slider 70 is borne by the floating force and the measuring disc. When the number of revolutions of the measuring disc is 1200 rpm or smaller, the load of the measurement head slider 70 is substantially borne by the measuring disc.

As can be understood from the above-mentioned facts, when the number of revolutions of the measuring disc is about 1500 rpm, the measurement head slider 70 and the measuring disc are in contact with each other and, in this state, the load of the measurement head slider 70 is borne by the floating force generated by the air flows introduced into the gaps between the two sides of the measurement head slider 70 and the measuring disc. That is, when the number of revolutions of the measuring disc is made to be about 1500 rpm, the magnetic head mounted operation the measurement head slider 70 can be brought into contact with the measuring disc without load.

〈Ninth Example〉

The relationship between the number of revolutions of the magnetic disc and the amount of floating of the head slider and the relationship between the number of revolutions of the magnetic disc and the frictional force acting on the head slider when the head slider has been secured to a predetermined radial position of the magnetic disc were examined by the following method.

The measuring head slider was an inclined-type head slider 70 arranged similar to that according to the eighth example.

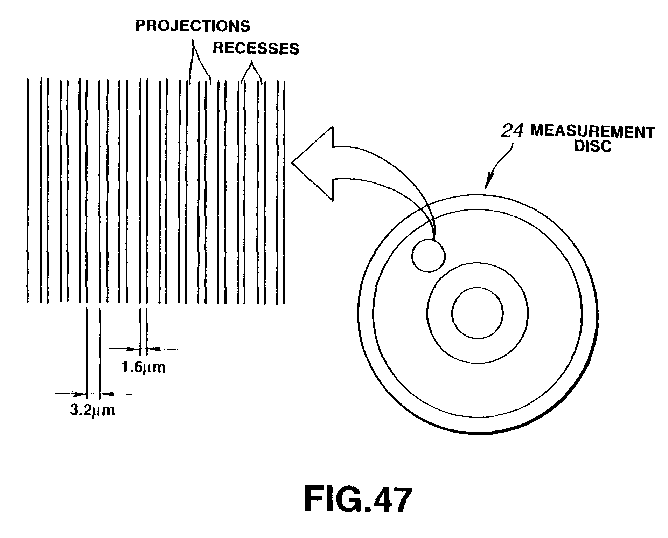

The measuring disc was a measurement disc 24 formed similarly to that according to the second example and having a structure that a magnetic film and the like were formed on a glass disc having a projection and pit pattern as shown in FIG. 47.

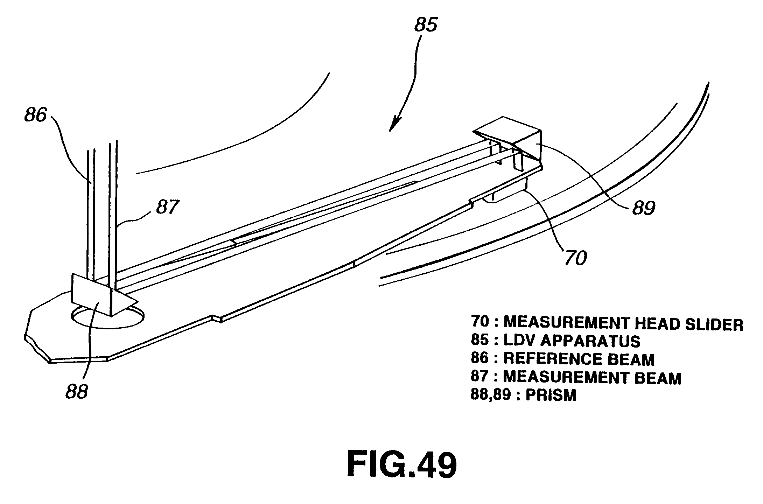

A measuring system similar to that according to the first example except for the measurement head slider 70 and the measurement disc 24 having the surface on which the predetermined projection and pit pattern was formed and a method similar to that according to the first example were employed to measure the number of revolutions of the measurement disc 24, the amount of floating of the measurement head slider 70 and the output of the strain gauge. Results were shown in FIG. 48.

As shown in FIG. 48, the amount of floating of the measurement head slider 70 was about 15 nm when the number of revolutions of the measurement disc 24 was 6000 rpm. As the number of revolutions was gradually reduced, the amount of floating was linearly reduced. When the number of revolutions was about 5000 rpm, the amount of floating was about 5 nm. When the number of revolutions was 5000 rpm or smaller, disorder of the amount of floating started. The output of the strain gauge was zero when the number of revolutions of the measurement disc 24 was 6000 rpm to 5000 rpm. When the number of revolutions was 5000 rpm or smaller, output was started. When the number of revolutions was 4400 rpm, the output was saturated.

The measure amount of floating of the measurement head slider 70 is a standard amount of floating for the head slider for the hard disc drive. As can be understood from the results shown in FIG. 48, contact of the measurement head slider 70 with the surface of the measurement disc 24 starts when the number of revolutions of the measurement disc 24 is about 5000 rpm in consideration of change in floating of the measurement head slider 70 and the glide height of the measurement disc 24.

That is, when the number of revolutions of the measurement disc 24 is larger than 5000 rpm, the load of the measurement head slider 70 is borne by the floating force generated by the air flows introduced into the gaps between the two sides of the measurement head slider 70 and the measurement disc 24. When the number of revolutions of the measurement disc 24 is smaller than 5000 rpm, the load of the measurement head slider 70 cannot be borne by only the floating force generated by the air flows introduced into the gaps between the two sides of the measurement head slider 70 and the measurement disc 24. Thus, the measurement head slider 70 is borne by the floating force and the measurement disc 24. When the number of revolutions of the measurement disc 24 is 4400 rpm or smaller, the load of the measurement head slider 70 is substantially borne by the measurement disc 24.

As can be understood from the above-mentioned facts, when the number of revolutions of the measurement disc 24 is about 5000 rpm, the measurement head slider 70 and the measurement disc 24 are in contact with each other and, in this state, the load of the measurement head slider 70 is borne by the floating force generated by the air flows introduced into the gaps between the two sides of the measurement head slider 70 and the measurement disc 24. That is, when the number of revolutions of the measurement disc 24 is made to be about 5000 rpm, the magnetic head mounted on the measurement head slider 70 can be brought into contact with the measurement disc 24 without load.

⟨Comparison and Evaluation of Eighth and Ninth Examples⟩

In the eighth and ninth examples, results similar to those obtained from the first example in which the projections and pits were formed on only the surface of the measurement disc 20 and the third example in which the projections and pits were formed only the rail surfaces of the measurement head slider 29 were obtained. As can be understood from the above-mentioned fact, the floating force for the head slider is generated in the eighth and ninth examples similar to the first and third examples. That is, even if no projections and pits are provided for the rail surfaces, floating force similar to that generated for the head slider having the rail surfaces on which the projections and pits are formed can be obtained by employing a structure that the rail surfaces are inclined with respect to the surface of the disc.

In the first example, floating force is generated in the direction in which the head slider is floated by the air flows which flow through the gaps between the recesses formed in the disc and the head slider. In the third example, floating force is generated in the direction in which the head slider is floated by the air flows which flow through the gaps between the recesses formed in the rail surfaces of the head slider and the disc. On the other hand, in the eighth and ninth examples, floating force is generated in the direction in which the head slider is floated by the air flows which flow through gaps between the two sides of the head slider, that is, the portions of the rail surfaces separated from the surface of the disc and the disc opposite to the rail surfaces.

As can be understood from the results of measurement, the floating force generated in the eighth and ninth examples acts substantially similarly to the floating force generated in the first and third examples. Therefore, also the eighth and ninth examples are arranged in such a manner that the load acting on the head slider and the floating force are balanced with each other similarly to the first and third examples so that the magnetic head mounted on the head slider can be brought into contact with the disc without load. Thus, abrasion of the magnetic head and the disc can be prevented.

The head slider according to the eighth and ninth examples is not required to have the projections and pits on the rail surfaces. Therefore, another advantage can be obtained in that the machining operation can relatively easily be performed and the manufacturing cost can be reduced.

〈Tenth Example〉

In this example, the amount of inclination of the head slider when a seeking operation is performed was examined.

In this example, a measurement head slider 70 similar to that according to the eighth example was employed as the measuring head slider. As the measuring disc, a glass disc having the flat and smooth surface similar to that according to the eighth example was employed.

The amount of inclination of the measurement head slider 70 was measured by a differential-type laser Doppler vibrometer unit 85 (hereinafter called an "LDV unit 85") structured as shown in FIG. 49. The LDV unit 85 is arranged to irradiate the two sides of a rear portion of the measurement head slider 70 with a reference beam 86 and a measurement beam 87 to detect returned light so as to measure the amount of displacement of the two sides of the rear portion of the measurement head slider 70. In this example, the LDV unit 85 was employed to measure the amount of inclination of the measurement head slider 70 when a seeking operation is performed.

The reference beam 86 and the measurement beam 87 which are emitted from the LDV unit 85 are reflected by a prism 88 disposed at the rotational center of the arm to run parallel to the arm. Then, the reference beam 86 and the measurement beam 87 are reflected from the direction in parallel to the arm to a direction perpendicular to the arm by a prism 89 disposed in an upper portion of the rear end of the measurement head slider 70. The reference beam 86 and the measurement beam 87 reflected by the prism 89 are made incident on the rear end of the measurement head slider 70.

The prism 88 disposed at the center of rotation of the arm and the prism 89 disposed in the upper portion of the rear end of the measurement head slider 70 are supported by a common support member (not shown). The support member is arranged to be rotated in synchronization with the rotation of the arm to which the measurement head slider 70 is joined in order to cause the prism 89 to always be positioned in the upper portion of the rear end of the measurement head slider 70 when the arm has been rotated. The reference beam 86 and the measurement beam 87 arranged to be emitted from the LDV unit 85 are made to irradiate the same portion of the measurement head slider 70 even if the measurement head slider 70 has performed a seeking operation.

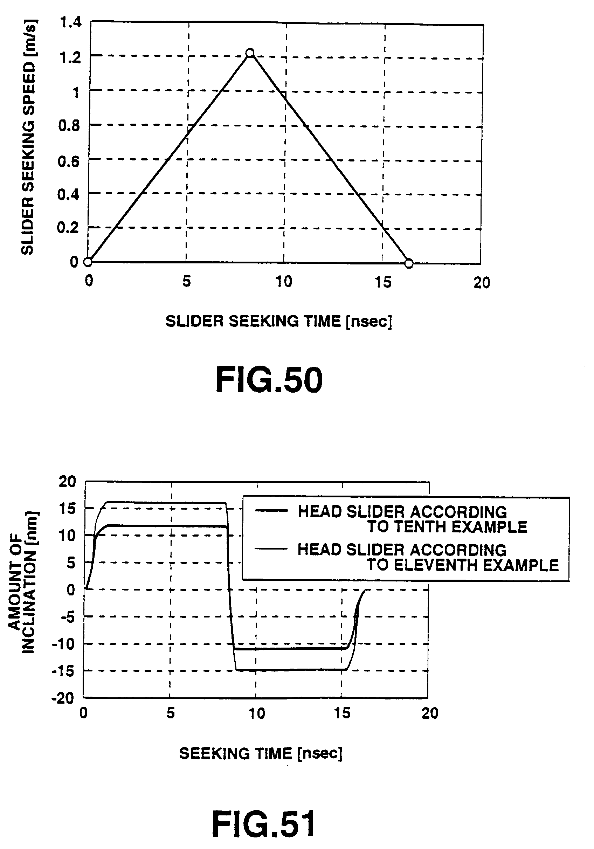

The seeking acceleration of the head slider of a hard disc drive is usually about 150 m/s$^2$ to about 300 m/s$^2$ in spite of difference between start of seeking and end of seeking. In this example, the measurement head slider 70 was moved in a region from radius of 20 mm to radius of 30 mm of the measuring disc with a speed profile shown in FIG. 50. That is, in this example, the seeking operation was performed at a positive acceleration of 150 m/s$^2$ in a range from the radius of 20 mm to 25 mm and at a negative acceleration of 150 m/s$^2$ in a range from the radius of 25 mm to 30 mm.

Note that the seeking operation is usually performed by the Hard disc drive by a voice coil motor. In this example, a stepping motor is disposed at the center of rotation of the arm so as to perform the seeking operation by the stepping motor.

Results of the foregoing measurement are shown in FIG. 51. In FIG. 51, axis of abscissa stands for seeking time and axis of ordinate stands for the difference in the amount of displacement of the two side portion of the rear end of the measurement head slider 70, that is, the amount of inclination of the measurement head slider 70. When the amount of inclination is zero, the measurement head slider 70 is not performing the seeking operation and it is stopped. That is, when the amount of inclination is zero, the measurement head slider 70 is in a normal state. When the amount of inclination is a positive value, the rear end of the two ends of the measurement head slider 70 adjacent to the outer portion of the disc is lower than that adjacent to the inner portion of the disc, that is, the measurement head slider 70 is inclined toward the outer portion of the disc. When the amount of inclination is a negative value, the measurement head slider 70 is inclined toward the inner portion of the disc.

As shown in FIG. 51, the measurement head slider 70 is inclined in such a manner that the gap which is generated between the measurement head slider 70 and the surface of the disc is larger at the inner portion of the disc than that at the outer portion of the disc in a range to the radius of 25 mm which is the position at which the seeking time is 8 nsec. The reason for this lies in that acceleration acts on the measurement head slider 70 in the direction toward the outer portion of the disc in a range to the radius of 25 mm which is the position at which the seeking time is 8 nsec. Moreover, inertia force acts on the measurement head slider 70 in a direction toward the inner portion of the disc.

The measurement head slider 70 is inclined in such a manner that the gap which is generated between the measurement head slider 70 and the surface of the disc is larger at the outer portion of the disc than that in the inner portion of the disc in a range exceeding the radius of 25 mm. The reason for this lies in that acceleration acts on the measurement head slider 70 in the direction toward the inner portion of the disc in a range exceeding the radius of 25 mm. Moreover, inertia force acts on the measurement head slider 70 in a direction toward the outer portion of the disc.

⟨Eleventh Example⟩

In this example, a measurement head slider 21 similar to that according to the first example was employed as the measuring head slider. Moreover, a glass disc having a flat and smooth surface similarly to that according to the tenth example was employed as the measuring disc.

A measuring system similar to that according to the tenth example was employed and a measuring method similar to that according to the tenth example was employed to measure the amount of inclination of the measurement head slider 21 realized during the seeking operation was measured. Results were shown in FIG. 51.

As shown in FIG. 51, the measurement head slider 21 is inclined in such a manner that the gap which is generated between the measurement head slider 21 and the surface of the disc is larger at inner outer portion of the disc than that at the outer portion of the disc in a range to the radius of 25 mm which is the position at which the seeking time is 8 nsec. The reason for this lies in that acceleration acts on the measurement head slider 21 in the direction toward the outer portion of the disc in a range to the radius of 25 mm which is the position at which the seeking time is 8 nsec. Moreover, inertia force acts on the measurement head slider 21 in a direction toward the inner portion of the disc. The amount of inclination is larger than that realized in the tenth example.

The measurement head slider 21 is inclined in such a manner that the gap which is generated between the measurement head slider 21 and the surface of the disc is larger at the outer portion of the disc than that in the inner portion of the disc in a range exceeding the radius of 25 mm. The reason for this lies in that acceleration acts on the measurement head slider 21 in the direction toward the inner portion of the disc in a range exceeding the radius of 25 mm. Moreover, inertia force acts on the measurement head slider 21 in a direction toward the outer portion of the disc. Also the foregoing amount of inclination is larger than that realized in the tenth example.

⟨Twelfth Example⟩

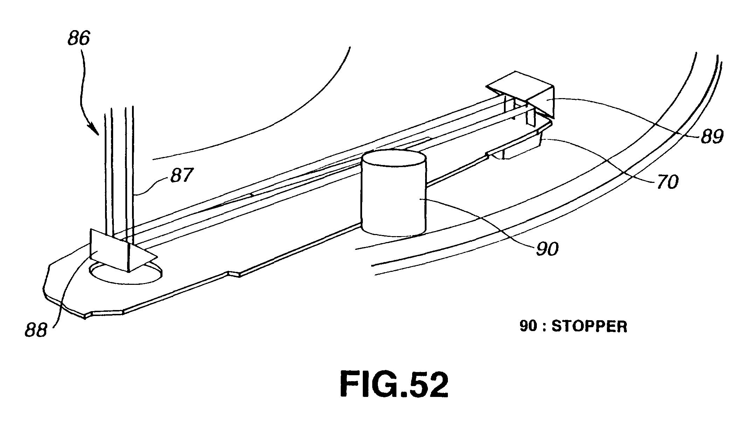

In this example, the measuring head slider and the measuring disc were similar to those according to the tenth example. A measuring system as shown in FIG. 52 was employed to measure the amount of inclination of the measurement head slider 70 realized during the seeking operation.

The measuring system shown in FIG. 52 has a structure a stopper 90 is provided to prevent movement of the measurement head slider 70 to the outside exceeding the position of the radius f 25 mm in addition to the measuring system according to the tenth example. Note that the measuring system according to this example is similar to that according to the tenth example except for the stopper 90.

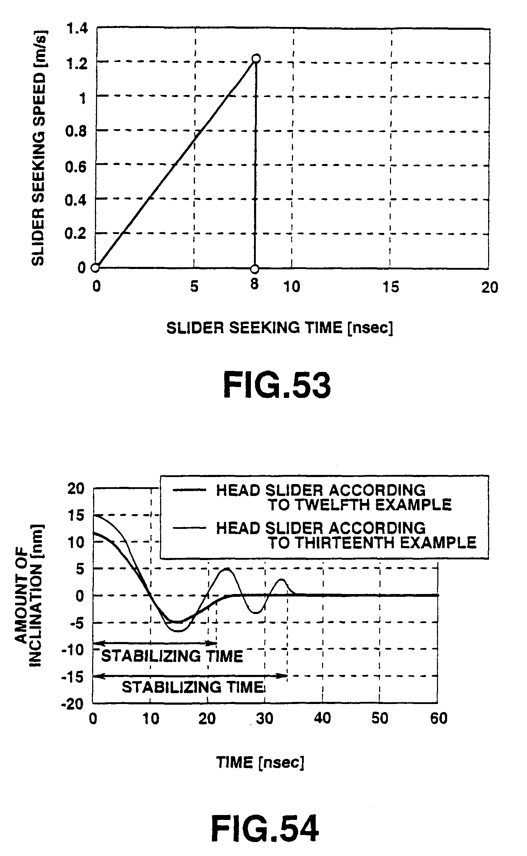

In this example, a speed profile as shown in FIG. 53 was employed to seek the measurement head slider 70 in the direction toward the outer portion of the disc at an acceleration of 150 m/s$^2$ from the position corresponding to the radius of 20 mm so as to cause the measurement head slider 70 collide with the stopper 90 disposed at the position corresponding to the radius of 25 mm. Note that the measurement head slider 70 does not collide with the stopper 90. An arm to which the measurement head slider 70 is joined is actually caused to collide with the stopper 90.

The change in the amount of inclination of the measurement head slider 70 was measured from a state in which the moving attitude of the measurement head slider 70 was disordered due to the collision to a state in which the moving attitude of the measurement head slider 70 was restored.

Results of measurement were shown in FIG. 54. FIG. 54 shows time required for the amount of inclination of the measurement head slider 70 to be made to be 10 % or lower of the maximum value of the amount of inclination of the stopper 90 when the stopper 90 collided with the arm was indicated as a stabilizing time.

As can be understood from FIG. 54, the moving attitude of the measurement head slider 70 is considerably disordered when the measurement head slider 70 collides with the stopper 90 disposed at the position corresponding to the radius of 25 mm. Then, the measurement head slider 70 is swung laterally, and then gradually restored to a normal moving attitude. Time required to stabilize the attitude was about 22 nsec.

⟨Thirteenth Example⟩

In this example, the measuring head slider was a measurement head slider 21 similar to that according to the first example. The measuring disc was similar to that according to the twelfth example. A measuring system similar to that according to the twelfth example was employed to measure change in the amount of inclination of the measurement head slider 70 when the measurement head slider 70 recovered the moving attitude.

Results were shown in FIG. 54. As can be understood from FIG. 54, the moving attitude of the measurement head slider 21 is considerably disordered when it collides with the stopper 90 disposed at the position corresponding to the radius of 25 mm. Then, the measurement head slider 21 is swung laterally, and then the normal moving attitude is restored. At this time, the stabilizing time is longer than that realized in the twelfth example, the stabilizing time being about 34 nsec.

⟨Comparison and Evaluation of Tenth to Thirteenth Examples⟩

As can be understood from FIG. 51 which shows results of measurement performed in the tenth example in which the inclined-type head slider is used and those of measurement performed in the eleventh example in which the head slider having the rail surfaces which are in parallel to the surface of the disc, use of the inclined-type head slider is able to further effectively prevent inclination of the head slider when the seeking operation is performed. That is, use of the inclined-type head slider enables a more stable seeking operation to be performed.

As can be understood from FIG. 54 which shows results of measurement performed in the twelfth example in which the inclined-type head slider is used and those of measurement performed in the thirteenth example In which the head slider having the rail surfaces which are in parallel to the surface of the disc, use of the inclined-type head slider enables the attitude to further quickly to be restored if external force acts on the head slider and thus the head slider is inclined. That is, use of the inclined-type head slider is able to furthermore stabilize the attitude of the head slider.

As can be understood from the above-mentioned results, the inclined-type head slider is able to easily stabilize the attitude of the head slider as compared with the head slider having the rail surfaces which are in parallel to the surface of the disc. Therefore, use of the inclined-type head slider enables the recording/reproducing characteristic to furthermore be improved.

⟨Fourteenth Example⟩

A measurement head slider 70 similar to that according to the eighth example was employed to measure durability. Note that the measuring disc was a magnetic disc having a structure that a magnetic film and the like similar to those according to the second example were formed on a glass disc having a flat and smooth surface.

In this example, the durability was measured in such a manner that the position of the measurement head slider 70 in the radial direction of the disc was made to be constant and contact-start-stop (CSS) was repeated. The dynamic coefficient of friction between the measuring disc and the measurement head slider 70 was about 0.2 when the experiment was started. The CSS was repeated. When the dynamic coefficient of friction between the measuring disc and the measurement head slider 70 exceeded 0.8, the experiment was interrupted. Then, the number of times of the performed CSS (hereinafter simply called "CSS times") was measured.

⟨Fifteenth Example⟩

In this example, the measuring head slider was a curved-shape head slider having rail surfaces formed into circular arc shapes, as shown in FIG. 36. The shape of the measuring head slider according to this example is similar to that of the measurement head slider 70 according to the fourteenth example except for the rail surfaces. The measuring disc was similar to that according to the fourteenth example. The above-mentioned measuring head slider and the measuring disc were employed to measure the CSS times similarly to the fourteenth example.

⟨Sixteenth Example⟩

In this example, the measuring head slider was a head slider similar to the measurement head slider 21 according to the first example and having a structure that the rail surfaces are in parallel to the surface of the disc. The shape of the measuring head slider according to this example is similar to the measurement head slider 70 according to the fourteenth example except for the rail surfaces. The measuring disc was similar to the measuring disc according to the fourteenth example. The above-mentioned measuring head slider and the measuring disc were employed to measure the CSS times similarly to the fourteenth example.

⟨Comparison and Evaluation of Fourteenth to Sixteenth Examples⟩

Results of the fourteenth to sixteenth examples are shown in Table 1.

Table 1

|  | CSS Times |
|---|---|
| Example 14 | 50,000 |
| Example 15 | 75,000 |
| Example 16 | 75,000 |

As shown in Table 1, the CSS times is larger in the fifteenth experiment in which the curved-surface head slider is employed as compared with the fourteenth example in which the inclined-type head slider is employed. The reason for this lies in that the curved-surface head slider does not damage the surface of the disc as compared with the linear-type head slider. That is, when the linear-type head slider is employed, the load is concentrated to edge portions of the rail surfaces when the disc and the head slider have been brought into contact with each other. Thus, the surface of the disc can easily be damaged. However, when the curved-surface head slider is employed, the contact point realized when the disc and the head slider have been brought into contact with each other is formed into a relatively wide surface. Therefore, the surface of the disc cannot easily be damaged.

If the head slider is inclined, a fact is expected that the inclined-type head slider is superior to the curved-surface head slider to restore the attitude of the head slider. As can be understood from results shown in Table 1, the curved-surface head slider is superior to the inclined-type head slider to improve the durability.

Industrial Applicability

As described above, the disc-type recording medium according to the present invention is able to maintain stable state of contact between the recording and/or reproducing head the disc-type recording medium when the recording and/or reproducing head has been brought into contact with the disc-type recording medium and a recording and/or reproducing operation has been performed. Therefore, an excellent recording and/or reproducing characteristic can be obtained. Moreover, the load of the head slider, on which the recording and/or reproducing head is mounted, is not added to the disc-type recording medium. Thus, the problem of the abrasion between the recording and/or reproducing head and the disc-type recording medium can be overcome.

The head slider according to the present invention enables a stable state of contact between the recording and/or reproducing head and the disc-type recording medium to be maintained when the recording and/or reproducing head mounted on the head slider is brought into contact with the disc-type recording medium and a recording and/or reproducing operation has been performed. Therefore, an excellent recording and/or reproducing characteristic can be obtained. Moreover, the load of the head slider, on which the recording and/or reproducing head is mounted, is not added to the disc-type recording medium. Thus, the problem of the abrasion between the recording and/or reproducing head and the disc-type recording medium can be overcome.

The recording and/or reproducing apparatus according to the present invention enables a stable state of contact between the recording and/or reproducing head and the disc-type recording medium to be maintained when the recording and/or reproducing head mounted on the head slider is brought into contact with the disc-type recording medium and a recording and/or reproducing operation has been performed. Therefore, an excellent recording and/or reproducing characteristic can be obtained. Moreover, the load of the head slider, on which the recording and/or reproducing head is mounted, is not added to the disc-type recording medium. Thus, the problem of the abrasion between the recording and/or reproducing head and the disc-type recording medium can be overcome.

As described above, according to the present invention, recording and/or reproducing can be performed in a state in which the recording and/or reproducing head and the disc-type recording medium are in contact with each other. As a result, the recording density can furthermore be raised.

**Claims**

1. A disc-type recording medium arranged to be recorded and/or reproduced by a recording and/or reproducing head mounted on a head slider having at least a portion of which is floated when a recording and/or reproducing operation is performed, said disc-type recording medium comprising:

   projections formed on the surface of said disc, wherein
   recording and/or reproducing is performed in a state in which said recording and/or reproducing head is in contact with said projections.

2. A disc-type recording medium according to claim 1, wherein recording and/or reproducing is performed in a state in which said recording and/or reproducing head and said projections are in contact with each other without any load.

3. A disc-type recording medium according to claim 2, wherein said recording and/or reproducing head and said projections are brought into contact with each other without any load when at least a portion of said head slider has been floated by air flows which flow through gaps between the surface of said disc and said head slider.

4. A disc-type recording medium according claim 1, wherein said projections are formed substantially in parallel to a direction in which said disc is rotated.

5. A head slider comprising:

   a recording and/or reproducing head mounted thereon and a predetermined projection and pit pattern formed on a surface thereof opposite to a disc-type recording medium, wherein
   at least a portion of said head slider is floated by air flow which flow through gaps between said head slider and said disc-type recording medium when a recording and/or reproducing operation is performed and said recording and/or reproducing head is brought into contact with the disc-type recording medium.

6. A head slider according to claim 5, wherein said recording and/or reproducing head is brought into contact with the disc-type recording medium without any load when a recording and/or reproducing operation is performed.

7. A head slider according to claim 5, wherein said projections and pits are formed in such a manner that the recesses are formed into grooves which are substantially in parallel to a direction in which the disc-type recording medium is rotated.

8. A head slider according to claim 5, wherein the disc-type recording medium with which recording and/or reproducing is performed is a disc-type recording medium having the surface on which projections are formed, and

said recording and/or reproducing head is brought into contact with said projections when a recording and/or reproducing operation is performed.

9. A head slider according to claim 5, wherein the disc-type recording medium with which recording and/or reproducing is performed is a disc-type recording medium having a flat and smooth surface.

10. A recording and/or reproducing apparatus comprising:

a disc-type recording medium having the surface on which projections are formed;
a head slider arranged in such a manner that at least a portion of said head slider is floated by air flows introduced into gaps between said head slider and said disc-type recording medium when a recording and/or reproducing operation is performed; and
a recording and/or reproducing head mounted on said head slider and arranged to perform recording and/or reproducing of said disc-type recording medium in a state in which said recording and/or reproducing head is in contact with said projections.

11. A recording and/or reproducing apparatus according to claim 10, wherein said recording and/or reproducing head is brought into contact with said projections without any load when a recording and/or reproducing operation is performed.

12. A recording and/or reproducing apparatus according to claim 10, wherein

said projections are formed substantially in parallel to a direction in which said disc-type recording medium is rotated.

13. A recording and/or reproducing apparatus comprising:

a disc-type recording medium;

a head slider having a projection and pit pattern on the surface thereof opposite to said disc-type recording medium; and

a recording and/or reproducing head mounted on said head slider and arranged to record/reproduce said disc-type recording medium,

wherein at least a portion of said head slider is floated by air flows which flow through gaps between said head slider and said disc-type recording medium and said recording and/or reproducing head is brought into contact with said disc-type recording medium when a recording and/or reproducing operation is performed.

14. A recording and/or reproducing apparatus according to claim 13, wherein said recording and/or reproducing head is brought into contact with said disc-type recording medium without any load when a recording and/or reproducing operation is performed.

15. A recording and/or reproducing apparatus according to claim 13, wherein projections are formed on the surface of said disc-type recording medium.

16. A recording and/or reproducing apparatus according to claim 15, wherein said projections are formed substantially in parallel to a direction in which said disc-type recording medium is rotated.

17. A recording and/or reproducing apparatus according to claim 13, wherein the surface of said disc-type recording medium is formed into a flat and smooth surface.

18. A head slider comprising:

a recording and/or reproducing head mounted there on and a pair of crown shape rails disposed on the surface thereof opposite to a disc-type recording medium in such a manner that said pair of crown shape rails are substantially in parallel to a direction in which the disc-type recording medium is rotated, wherein at least a portion of said head slider is floated by air flows which flow through gaps between said head slider and said disc-type recording medium and said recording and/or reproducing head is brought into contact with said disc-type recording medium when a recording and/or reproducing operation is performed, and when an assumption is made that the length of each of said rails is L, the difference in the amount of floating between an end into which air on each of said rails is introduced and an end from which air is discharged is $\Delta d$ and a

crown amount of each of said rail is C, the crown amount C satisfies the following Equation (1):

$$C \leq L\{L - (L^2 - \Delta d^2)^{1/2}\}/(2\Delta d) \qquad (1)$$

19. A head slider according to claim 18, wherein projections and pits are formed on the surface of said disc-type recording medium.

20. A head slider according to claim 18, wherein at least either of said pair of rails has projections and pits on the surface thereof opposite to said disc-type recording medium.

21. A head slider according to claim 18, wherein the crown amount C is 50 nm or smaller.

22. A recording and/or reproducing apparatus comprising:

a disc-type recording medium having the surface on which projections and pits are formed; a head slider arranged in such a manner that at least a portion thereof is floated by air flows which flow through gaps between said head slider and said disc-type recording medium when a recording and/or reproducing operation is performed; and a recording and/or reproducing head mounted on a lengthwise directional end of said head slider and arranged to perform recording and/or reproducing of said disc-type recording medium in a state in which said recording and/or reproducing head is in contact with the projections of said disc-type recording medium, wherein said head slider has a pair of crown shape rails formed on the surface thereof opposite to said disc-type recording medium in such a manner that said pair of crown shape rails are substantially in parallel to a direction in which said disc-type recording medium is rotated, and when an assumption is made that the length of each of said rails is L, the difference in the amount of floating between an end into which air on each of said rails is introduced and an end from which air is discharged is $\Delta d$ and a crown amount of each of said rail is C, the crown amount C satisfies the following Equation (2):

$$C \leq L\{L - (L^2 - \Delta d^2)^{1/2}\}/(2\Delta d) \qquad (2)$$

23. A recording and/or reproducing apparatus according to claim 22, wherein at least either of said pair of rails has projections on the surface thereof opposite to said disc-type recording medium.

24. A recording and/or reproducing apparatus according to claim 22, wherein the crown amount C is 50 nm or smaller.

25. A head slider comprising:

a recording and/or reproducing head mounted there on and a pair of rails disposed on the surface thereof opposite to a disc-type recording medium in such a manner that said pair of rails are substantially in parallel to a direction in which the disc-type recording medium is rotated, wherein gaps are formed between at least a portion of said pair of rails and the disc-type recording medium, at least a portion of said head slider is floated by air flows which flow through the gaps and said recording and/or reproducing head is brought into contact with the disc-type recording medium.

26. A head slider according to claim 25, wherein said pair of rails have surfaces opposite to said disc-type recording medium and inclined with respect to the surface of said disc-type recording medium.

27. A head slider according to claim 25, wherein said pair of rails have surfaces opposite to said disc-type recording medium and formed into curved surfaces.

28. A head slider according to claim 25, wherein said pair of rails have a projection and pit pattern on the surfaces thereof opposite to said disc-type recording medium.

29. A head slider according to claim 25, wherein said recording and/or reproducing head is mounted on a center line between said pair of rails.

30. A head slider according to claim 29, wherein said recording and/or reproducing head is mounted on the outside of a region interposed between said pair of rails, and

the shape of the surfaces opposite to said disc-type recording medium are symmetrical with respect to the center line.

31. A head slider according to claim 25, wherein said pair of rails are formed in such a manner that at least either of a front end or a rear end is formed into a diagonal cut portion.

32. A recording and/or reproducing apparatus comprising:

a disc-type recording medium; a head slider arranged in such a manner that at least a portion thereof is floated when a recording and/or reproducing operation is performed; and

a recording and/or reproducing head mounted on said head slider and arranged to perform recording and/or reproducing in a state in which said recording and/or reproducing head is in contact with said disc-type recording medium, wherein

said head slider has a pair of rails formed on a surface thereof opposite to said disc-type recording medium in such a manner that said pair of rails are substantially in parallel to a direction in which said disc-type recording medium is rotated, and

gaps are formed between at least portions of said pair of rails and said disc-type recording medium, at least a portion of said head slider is floated by air flows which flow through the gaps, and said recording and/or reproducing head is brought into contact with said disc-type recording medium when a recording and/or reproducing operation is performed.

33. A recording and/or reproducing apparatus according to claim 32, wherein said pair of rails have surfaces opposite to said disc-type recording medium and inclined with respect to the surface of said disc-type recording medium.

34. A recording and/or reproducing apparatus according to claim 32, wherein said pair of rails have surfaces opposite to said disc-type recording medium and formed into curved surfaces.

35. A recording and/or reproducing apparatus according to claim 32, wherein a projection and pit pattern is formed on the surface of said disc-type recording medium.

36. A recording and/or reproducing apparatus according to claim 32, wherein said pair of rails have surface opposite to said disc-type recording medium and incorporating a predetermined projection and pit pattern.

**FIG.1**

Labels: 1 HARD DISC DRIVE; 3 MAGNETIC DISC; 6 HEAD SLIDER; ARM 4; 4a; VOICE COIL 7 MOTOR; 7a; 7b; VOICE COIL 5; 2 CASE; MOTOR 9

**FIG.2**

EP 0 871 174 A1

FIG.3

N2

6

8

N1

3

L

# FIG.4

16a

16

16b

# FIG.5

SERVO ZONE

DATA TRACK DT

GUARD BAND GB

SERVO PATTERN SP

DATA ZONE

**FIG.6**

EP 0 871 174 A1

DT    DT    DT    DT
  GB    GB    GB    14 MAGNETIC
                        FILM

~13 SUBSTRATE

# FIG.7A

SERVO ZONE | DATA ZONE

SP    DT

14

13

# FIG.7B

DIRECTION OF MOVEMENT

*44* LASER BEAM

*42* PHOTORESIST

*43* TURN TABLE

ROTATIONAL DIRECTION

*41* GLASS BASE DISC

PATTERN CUTTING

*42*

*41*

DEVELOPMENT

*46* STAMPER

*45* NICKEL

*41*    *42*

NICKEL PLATING

*42*

*41*

COMPLETION OF STAMPER

FIG.8

EP 0 871 174 A1

**46**

**46**

**13 SUBSTRATE**

**MOLDING**

**FILM FORMING (SPUTTERING)**

**13**

**3 MAGNETIC DISC**

**COMPLETION OF MAGNETIC DISK**

**MAGNETIZING MAGNETIC HEAD** **48**

**47 MAGNETIZING UNIT**

**3**

**MAGNETIZATION**

# FIG.9

EP 0 871 174 A1

**FIG.10A**

**FIG.10B**

FIG.11

FLAT AREA

PROJECTIONS

RECESSES

20 MEASUREMENT DISC

0.4mm

1.6μm

3.2μm

**FIG.12**

EP 0 871 174 A1

MEASUREMENT 20
DISC

MEASUREMENT 21
HEAD SLIDER

LOAD BEAM 22

23
STRAIN GAUGE

BEAM FOR MEASURING
AMOUNT OF FLOATING

# FIG.13

FIG.14

PROJECTIONS

RECESSES

24 MEASUREMENT
DISC

1.6μm

3.2μm

# FIG.15

EP 0 871 174 A1

MEASUREMENT *24*
DISC

MEASUREMENT *25*
HEAD SLIDER

LOAD BEAM *26*

*27* STRAIN
GAUGE

SCANNING
WITH 50 Hz

*28*
MOVABLE
STAGE

# FIG.16

## FIG.17

1.6mm

0.2mm          0.2mm

2.0mm

SIDE VIEW          PLAN VIEW

29
MEASUREMENT
HEAD SLIDER

A

FRONT VIEW

3.2μm          1.6μm

0.2μm

ENLARGED
PORTION A

# FIG.18

48

## FIG.19

## FIG.20

**FIG.21**

**FIG.22**

# FIG.23

40 HEAD SLIDER

OUTER PORTION
OF MAGNETIC DISK

INNER PORTION
OF MAGNETIC DISK

40c

40a

42

40d

40b

21

41 MAGNETIC DISC

20

RADIAL DIRECTION

FIG.24

EP 0 871 174 A1

DIRECTION IN WHICH
HEAD SLIDER IS MOVED

CROWN AMOUNT C

40c, 40d

A

40a, 40b

40

B

42

41

FIG.25

**FIG.26**

FLAT AREA

PROJECTIONS

RECESSES

20 MEASUREMENT DISC

0.4mm

1.6μm

3.2μm

**FIG.27**

EP 0 871 174 A1

SIDE VIEW    PLAN VIEW

FRONT VIEW

# FIG.28

SUPPORT POINT

50

$\Delta d = h_2 - h_1$

$h_2$

$h_1$

# FIG.29

FIG.30

SUPPORT POINT

$$h_5 - h_6 = \Delta d; \; h_6 > 5 \; [nm]$$

# FIG.31

RAIL WIDTH : W
WIDTH OF RAIL PROJECTED ON DISK : $L_1$
$L_1 = W$

## FIG.32A

WIDTH OF PROJECTION OF RAIL ON DISK
WHEN HEAD SLIDER IS INCLINED : $L_2$
$L_2 = W\cos\theta$

## FIG.32B

FIG.33A

FIG.33B

RAIL WIDTH : W
WIDTH OF RAIL PROJECTED ON DISK : $L_1$
$L_1 = W cos\delta$

$L_2 = W cos(\delta - \theta) > L_1$

FIG.34A

FIG.34B

**FIG.35**

**FIG.36**

60B

60e

60f

# FIG.37

60C

60g

60h

# FIG.38

80

82

81

# FIG.39

80A

82A

81A

# FIG.40

# FIG.41

SIDE VIEW    PLAN VIEW

FRONT VIEW

# FIG.42

SIDE VIEW    PLAN VIEW

FRONT VIEW

# FIG.43

SIDE VIEW

PLAN VIEW

FRONT VIEW

FIG.44

70

0.5deg.

1.6mm

0.2mm    0.2mm

2.0mm

SIDE VIEW

PLAN VIEW

0.1deg.

FRONT VIEW

# FIG.45

**FIG.46**

**FIG.48**

PROJECTIONS

RECESSES

24 MEASUREMENT DISC

1.6μm

3.2μm

FIG.47

EP 0 871 174 A1

**FIG.49**

70 : MEASUREMENT HEAD SLIDER
85 : LDV APPARATUS
86 : REFERENCE BEAM
87 : MEASUREMENT BEAM
88,89 : PRISM

EP 0 871 174 A1

FIG.50

FIG.51

FIG.52

90 : STOPPER

**FIG.53**

**FIG.54**

## INTERNATIONAL SEARCH REPORT

| International application No. |
| --- |
| PCT/JP97/03768 |

**A. CLASSIFICATION OF SUBJECT MATTER**

Int. Cl$^6$  G11B21/21

According to International Patent Classification (IPC) or to both national classification and IPC

**B. FIELDS SEARCHED**

Minimum documentation searched (classification system followed by classification symbols)

Int. Cl$^6$  G11B21/21, 5/00, 11/10

Documentation searched other than minimum documentation to the extent that such documents are included in the fields searched

Jitsuyo Shinan Koho          1965 - 1997
Kokai Jitsuyo Shinan Koho    1971 - 1996
Toroku Jitsuyo Shinan Koho   1994 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 5-143976, A (Hitachi, Ltd.), January 8, 1991 (08. 01. 91)(Family: none) | 1 |
| Y | | 4, 12, 8, 15, 19, 35 |
| X | JP, 4-42433, A (Matsushita Electric Industrial Co., Ltd.), June 8, 1990 (08. 06. 90)(Family: none) | 1 |
| Y | | 4, 12, 8, 15, 19, 35 |
| Y | JP, 62-150775, U (Sony Corp.), March 14, 1986 (14. 03. 86)(Family: none) | 2, 11, 6, 14 |
| Y | JP, 5-94683, A (Victor Co. of Japan, Ltd.), September 30, 1991 (30. 09. 91)(Family: none) | 3, 10, 5, 13, 25, 32, 7, 16, 20, 23, 28, 36 |

[X] Further documents are listed in the continuation of Box C.  [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| December 4, 1997 (04. 12. 97) | December 16, 1997 (16. 12. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP97/03768 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP, 1-282721, A (Mitsubishi Electric Corp.), May 6, 1988 (06. 05. 88)(Family: none) | 3, 10, 5, 13, 25, 32, 9, 17 |
| Y | JP, 5-347008, A (Fujitsu Ltd.), June 16, 1992 (16. 06. 92)(Family: none) | 3, 10, 5, 13, 25, 32, 9, 17 |
| Y | JP, 7-73629, A (Sony Corp.), August 31, 1993 (31. 08. 93)(Family: none) | 18, 22 |
| Y | JP, 4-167279, A (Kyocera Corp.), June 16, 1992 (16. 06. 92)(Family: none) | 21, 24 |
| Y | JP, 63-96722, A (Hitachi, Ltd.), April 27, 1988 (27. 04. 88)(Family: none) | 26, 33 |
| Y | JP, 49-18312, A (Nippon Telegraph & Telephone Public.Corp.), February 18, 1974 (18. 02. 74)(Family: none) | 27, 34 |
| Y | JP, 57-82251, A (Hitachi Metals, Ltd.), May 22, 1982 (22. 05. 82)(Family: none) | 31 |

Form PCT/ISA/210 (continuation of second sheet) (July 1992)